# FASCICULE DE BREVET EUROPEEN

(11) **EP 3 579 723 B1**
(45) Date de publication et mention de la délivrance du brevet: **31.03.2021**
(21) Numéro de dépôt: 18707093.3
(22) Date de dépôt: 07.02.2018
(51) Int. Cl.: A45D 34/04, A45D 40/26, B29C 45/16, B29C 45/00, B65D 1/09, B65D 51/32

(54) **RECIPIENT-APPLICATEUR POUR UN PRODUIT COSMETIQUE**
BEHÄLTER UND AUFTRAGELEMENT FÜR KOSMETISCHE PRODUKTE
CONTAINER-APPLICATOR FOR COSMETIC PRODUCTS

(30) Priorité: 07.02.2017 FR 1751015
(43) Date de publication de la demande: 18.12.2019
(73) Titulaire: Cinqpats, 91470 Limours (FR)
(72) Inventeur: MATHIEZ, Jean-Louis, 91470 Limours (FR)
(74) Mandataire: Ernest Gutmann - Yves Plasseraud S.A.S.
(86) Numéro de dépôt international: PCT/FR2018/050302
(87) Numéro de publication internationale: WO 2018/146419

(56) Documents cités:
- EP-A1- 0 320 363
- US-A1- 2006 102 192
- US-A1- 2012 279 876

## Description

L'invention concerne les récipients-applicateurs pour des contenus tels que des produits cosmétiques (mascaras, « eye-liner », « lip-gloss », etc.) et plus spécialement les récipients-applicateurs de faible contenance (pour une faible quantité de contenu) et de petite taille. Il faut comprendre par là un volume utile de contenu de l'ordre de 1 ml à 20 ml, une longueur totale de 60 mm à 200 mm, une longueur axiale de réservoir comprise entre 40 mm et 150 mm et un diamètre extérieur de l'ordre de 10 mm à 35 mm.

L'invention a plus précisément pour objet un tel récipient-applicateur, assemblé ou non, fermé ou ouvert, empli de contenu ou non, un sous-ensemble unitaire capuchon-applicateur-tige-essoreur-enveloppe spécialement apte et destiné à former lorsqu'il est assemblé avec un réservoir un tel récipient-applicateur, un procédé de fabrication d'un tel récipient-applicateur empli de contenu, et des outillages de fabrication d'un tel récipient-applicateur.

Une application possible de l'invention est un récipient-applicateur d'un échantillon de produit cosmétique mis à la disposition des acheteurs potentiels pour leur permettre de tester le contenu en une fois ou un petit nombre de fois (par exemple 2 à 5 fois). Dans le cas d'une telle application, il peut être nécessaire de disposer de petites séries de récipients-applicateur à des conditions économiques raisonnables.

Ces caractéristiques - faible contenance, petite taille, échantillon, usage unique ou en un petit nombre de fois, possibilité de petites séries - induisent nombre d'exigences. Le récipient-applicateur doit être simple et peu coûteux, y compris pour des petites séries. Il ne doit pas comporter de pièces complexes ou nécessitant une quantité importante de matière ou impliquant une taille substantielle. Il doit pouvoir être esthétique. Il doit pouvoir être fabriqué simplement, rapidement, à cadence élevée, à moindre coût y compris pour des petites séries. Il doit pouvoir être fabriqué, y compris pour l'étape incluant l'emplissage et l'association finale, sans que ses éléments constitutifs ne soient détériorés. Il doit pouvoir être fabriqué sans nécessiter des outillages complexes et coûteux, comme des moules à tiroirs. Il doit être d'utilisation simple, sans nécessiter des manipulations compliquées. Enfin, l'étanchéité doit être suffisamment efficace, sûre et réalisée sans difficulté.

Un récipient-applicateur classique connu a une forme générale cylindrique allongée le long d'un axe et comporte plusieurs moyens fonctionnels ou structurels associés ou assemblés les uns aux autres :
- un réservoir rigide pour le contenu, ayant une paroi axiale périphérique avec une terminaison distale fermée par un fond et une terminaison proximale ouverte,
- un capuchon de fermeture, amovible, ayant une paroi périphérique formant jupe et une paroi sommitale,
- un applicateur avec tige d'association - en une pièce ou en plusieurs pièces associées de façon rigide fixe -, comprenant un applicateur et une partie d'association rigide fixe au capuchon de sorte à pouvoir former un tout capuchon-applicateur-tige,
- et un essoreur avec deux bords ouverts, l'un distal de plus petite ouverture et l'autre proximal de plus grande ouverture.

Le terme « distal » doit être compris comme le qualificatif d'un moyen éloigné ou le plus éloigné de la paroi sommitale du capuchon (qui forme une extrémité du récipient-applicateur) et le terme « proximal » comme le qualificatif d'un moyen proche ou le plus proche de cette paroi sommitale.

Un tel récipient-applicateur comporte aussi des moyens d'interface pour l'étanchéité et l'association. De façon typique, l'étanchéité est réalisée par un serrage axial de deux pièces ou bien entre la tige de l'applicateur et l'essoreur. Le plus souvent, l'essoreur est flexible (voir US 2013/0276817, EP 07 92603, EP 07 30416 et EP 1 425 987) tandis que moins fréquemment il est essentiellement rigide (voir EP 2 317 888). Les essoreurs flexibles sont les mieux adaptés à leur fonction, contrairement aux essoreurs essentiellement rigides dont l'efficacité est limitée et qui peuvent détériorer les applicateurs (voir US 5 599 125).

Un tel récipient-applicateur peut faire l'objet de nombre de réalisations, notamment celle du type spécifique de l'invention, dans lequel le récipient-applicateur est de faible contenance et de petite taille et comporte cinq pièces distinctes - réservoir, capuchon, applicateur avec tige d'association, enveloppe et essoreur flexible -.

Le document US 2012/0279876 décrit un récipient-applicateur avec essoreur flexible, mais qui n'est pas du type de l'invention dans la mesure où un anneau périphérique de blocage (pouvant être qualifié de douille) n'est pas associé au reste du récipient-applicateur, en l'espèce le réservoir, de façon rigide fixe mais de façon coulissante axialement. Le capuchon est pour partie en matière plastique moulée par injection et pour partie en métal et pourvu de crochets de verrouillage élastiques. Le réservoir comporte sur sa face axiale périphérique un épaulement avec lequel peuvent coopérer les crochets et à l'intérieur de laquelle est monté l'essoreur qui comporte une collerette annulaire saillante par rapport à la terminaison proximale ouverte du réservoir et qui remplit à la fois la fonction essorage et la fonction étanchéité réservoir / capuchon moyennant un appui axial. Ce récipient-applicateur comporte l'anneau périphérique de blocage précédemment mentionné qui est de petite longueur axiale comparativement à celle du réservoir, ouvert à ses deux extrémités, monté coulissant (et non pas fixe) par rapport au réservoir et au capuchon lorsqu'il est monté sur le réservoir. La longueur axiale commune réservoir / anneau de blocage est faible par rapport celle du réservoir, de l'ordre de 25%. Cet anneau de blocage est destiné à verrouiller les crochets pour empêcher l'ouverture du récipient-applicateur. Lors de sa fermeture et de son ouverture, l'anneau de blocage est déplacé à coulissement axialement, dans un sens ou dans l'autre pour libérer ou au contraire verrouiller les crochets. Un tel récipient-applicateur est complexe, comportant des crochets élastiques et un anneau de blocage monté à coulissement. Son diamètre est conséquent, du fait des crochets et de l'anneau de blocage. Il fait jouer à l'essoreur une fonction autre que sa fonction d'essorage, à savoir une fonction étanchéité, ce qui n'est pas souhaitable. Un tel récipient-applicateur ne satisfait donc pas les exigences induites par les caractéristiques précédemment mentionnées.

Le document EP 0 320 363 décrit un récipient-applicateur avec essoreur essentiellement rigide, qui par ailleurs n'est pas non plus du type de l'invention dans la mesure où il est formé de trois pièces distinctes injectées en polypropylène assemblées : un capuchon-applicateur-tige, un réservoir intérieur et une enveloppe-essoreur avec une partie extérieure de plus grand diamètre, une première partie intérieure de plus petit diamètre formant filetage d'association, une seconde partie intérieure de plus petit diamètre formant essoreur qui est rigide et en polypropylène, un décrochement transversal de liaison entre ces parties, comportant une extrémité distale ouverte et située vers la terminaison distale du réservoir, une extrémité proximale ouverte et située dans le capuchon, et enfin la plus petite ouverture de l'essoreur. La longueur axiale commune réservoir / enveloppe est de l'ordre de 85%. Le réservoir est disposé dans l'enveloppe-essoreur moyennant un jeu radial important sur une partie substantielle de la longueur axiale commune réservoir / enveloppe, à l'exception des deux parties extrêmes du réservoir en contact de maintien rigide fixe avec l'enveloppe-essoreur. Les moyens d'association capuchon-applicateur-tige / enveloppe-essoreur comprennent des filets de vissage complémentaires sur le capuchon et sur l'enveloppe-essoreur, l'ouverture et la fermeture étant réalisées par rotation. Les moyens d'étanchéité comprennent des moyens d'étanchéité enveloppe-essoreur / capuchon associés à des moyens d'étanchéité récipient / enveloppe-essoreur et des moyens d'étanchéité essoreur / tige du capuchon-applicateur-tige. Les moyens d'étanchéité enveloppe-essoreur / capuchon résultent du serrage axial des surfaces conjuguées de l'enveloppe-essoreur attenante à son filet de vissage et du capuchon attenante à son filet de vissage, ce serrage axial étant obtenu par vissage. Les moyens d'étanchéité récipient / enveloppe-essoreur résultent de l'assemblage étanche du récipient et de l'enveloppe-essoreur. Quant aux moyens d'étanchéité essoreur / tige du capuchon-applicateur-tige, ils résultent de l'appui étanche de l'essoreur sur la tige. Un tel récipient-applicateur présente plusieurs inconvénients et limites. Le choix de réduire le nombre de pièces à trois est un facteur fortement limitatif de la modularité. Les moules de réalisation des trois pièces sont compliqués et leur productivité est faible, la fabrication étant plutôt lente. Il s'ensuit un coût de production élevé. S'agissant du moule du capuchon-applicateur-tige, il est difficile de le refroidir, surtout dans le cas de tiges de gros diamètre et il doit être équipé d'un système de dévissage motorisé pour extraire le filetage intérieur, ce qui accroit le coût du moule et ralentit la cadence de production. S'agissant du moule de l'enveloppe-essoreur, il doit être équipé d'un système à coulisseaux mobiles pour démouler le filetage, ce qui accroit le coût du moule et ralentit la cadence de production. Plus généralement, la conception du récipient-applicateur est telle que pour chaque volume utile, et donc pour chaque taille correspondante du récipient-applicateur, il est nécessaire de disposer d'un moule spécifique, ce qui est coûteux et très contraignant en cas de changement de moule, du fait du poids du moule. Cela limite la flexibilité, sauf à accroître les coûts, tandis que les gamme de volumes et de tailles sont limitées et les petites séries peu envisageables. Du fait même de sa conception, l'aspect du récipient-applicateur manque sûrement de la qualité visuelle requise, par exemple du fait de retassures sur le haut du capuchon à cause du retrait de la tige au refroidissement, d'un point d'injection visible et disgracieux sur le capuchon, d'autant que forcément important pour pouvoir réaliser la tige, des lignes de flux sur le capuchon au niveau du filetage intérieur, des lignes de flux et retassures sur l'enveloppe-essoreur, et la présence sous le réservoir d'un creux avec rigole annulaire. L'étanchéité du récipient-applicateur n'est pas satisfaisante, d'une part, parce que les surfaces conjuguées en contact sensées assurer l'étanchéité sont attenantes aux filets de vissage de l'enveloppe-essoreur et du capuchon, d'autre part, parce que l'on sait que l'appui de l'essoreur sur la tige ne permet pas non plus une étanchéité efficace et d'ailleurs, il est parfois recommandé qu'il y ait entre l'essoreur et la tige un certain jeu radial. La présence des filetages nécessite des épaisseurs de matière suffisante du capuchon et de l'enveloppe-essoreur et a pour effet, toutes choses égales par ailleurs, de réduire le diamètre de l'ouverture qui se présente à l'applicateur, ce qui limite le diamètre maximum d'applicateurs utilisables. Enfin, du fait de son intégration monobloc avec l'enveloppe, l'essoreur est essentiellement rigide, comme l'enveloppe, avec les inconvénients inhérents déjà mentionnés.

Les documents US2001/0052348 et US2006/0225759 décrivent chacun un applicateur d'échantillon de mascara, qui comporte également trois pièces et qui présente les mêmes inconvénients et limites.

Le document US 2006/0102192 décrit un récipient-applicateur avec essoreur flexible et qui est du type spécifique de l'invention. Ce récipient-applicateur, d'une contenance comprise entre 1 ml et 30 ml comprend un réservoir matière plastique réalisé par soufflage, un capuchon, un applicateur avec tige d'association, une enveloppe en totalité extérieure comportant une extrémité distale fermée par un fond et située vers la terminaison distale du réservoir et une extrémité proximale ouverte et située du côté du capuchon et de la terminaison proximale ouverte du réservoir, et enfin un essoreur distinct, rapporté, flexible. Le réservoir est mi intérieur mi extérieur, étant disposé à l'intérieur de l'enveloppe moyennant un jeu radial de 0,1 mm sur toute la longueur axiale, tandis que sa terminaison proximale ouverte, de forme resserrée, saille axialement de l'extrémité proximale de l'enveloppe. Il doit être compris que l'expression « mi... mi... » exprime un état intermédiaire sans que cela ait une précision géométrique. La longueur axiale commune réservoir / enveloppe est donc de 100%. Les moyens d'association rigide réservoir / enveloppe extérieure comprennent, vers la terminaison distale du réservoir et l'extrémité distale de l'enveloppe, un maintien radial assuré par la coopération d'un téton axial prévu sur la face intérieure du fond de l'enveloppe et d'une cavité prévue sur la face en regard du fond du réservoir et, du côté de la terminaison proximale ouverte du réservoir et de l'extrémité proximale ouverte de l'enveloppe, un maintien axial assuré par la coopération d'une saillie annulaire et d'une rainure annulaire prévues sur le réservoir et l'enveloppe.

L'essoreur comporte une collerette annulaire axiale et radiale saillant de la terminaison proximale ouverte du réservoir, et accessible pour l'utilisateur une fois le capuchon enlevé. Les moyens d'association rigide essoreur / partie restante du récipient-applicateur comprennent un maintien par enfoncement à force de l'essoreur dans la terminaison proximale ouverte du réservoir. Les moyens d'association rigide amovible capuchon / partie restante du récipient-applicateur (en l'espèce le réservoir) comprennent des filets de vissage complémentaires sur le capuchon et le réservoir, l'ouverture et la fermeture étant réalisées par rotation. Les moyens d'étanchéité capuchon / partie restante du récipient-applicateur sont obtenus par serrage axial de la collerette annulaire de l'essoreur interposée entre le bord de l'ouverture proximale du réservoir et une face transversale intérieure de la partie d'association rigide fixe de l'applicateur avec tige d'association au capuchon. Dans ce récipient-applicateur, la fonction de l'enveloppe, en verre, est purement décorative, à savoir donner l'impression visuelle d'une paroi de réservoir qui soit épaisse.

La fabrication classique d'un tel récipient-applicateur consiste, dans une réalisation, à :
- a/ réaliser un tout capuchon-applicateur-tige, en associant de façon rigide fixe le capuchon et l'applicateur avec tige d'association au moyen de la partie d'association,
- b/ réaliser le réservoir et dans le cas du document US 2006/0102192, l'enveloppe,
- c/ emplir le réservoir de contenu, puis associer de façon rigide fixe un essoreur dans la terminaison proximale du réservoir, et
- d/ introduire l'applicateur et la tige dans l'essoreur puis mettre en place le capuchon et ainsi fermer le récipient-applicateur.
Le plus souvent, les étapes a/ et b/ sont faites sur un site de plasturgie, et les pièces réalisées sont envoyées à un site de conditionnement distant où sont faites les étapes c/ et d/.
Avec cette réalisation, il a été constaté que l'étape d/ se révélait problématique car l'introduction de l'applicateur et de la tige dans l'essoreur est difficile et lente et il peut produire une perte d'alignement entre la tige et l'applicateur qui ne permet pas le montage dans l'essoreur, limite la cadence de fabrication et génère des rebuts.

Dans une autre réalisation, l'étape c/ est inversée en ce sens que, d'abord, on associe de façon rigide fixe l'essoreur dans la terminaison proximale du réservoir vide, puis on emplit le réservoir de contenu au moyen d'une buse d'injection que l'on fait pénétrer dans l'essoreur. Mais, il a été constaté que l'opération d'emplissage ne pouvait être réalisée qu'à cadence limitée, sans que les problèmes précédents ne soient solutionnés.

Un récipient-applicateur selon le document US 2006/0102192 et sa fabrication ne satisfont pas les exigences précédemment mentionnées. La fabrication présente les problèmes déjà exposés. L'étanchéité par compression axiale de la collerette annulaire de l'essoreur n'est pas satisfaisante. Il en est de même des filets de vissage sur le capuchon et le réservoir. Par ailleurs, la structure du récipient-applicateur nécessite des outillages complexes et coûteux, comme des moules à tiroirs. Et la réalisation d'une enveloppe en verre est inappropriée pour un échantillon, outre les problèmes de tolérances dimensionnelles.

Le problème à la base de l'invention est donc de surmonter les limites, inconvénients et problèmes des récipients-applicateur précédemment mentionnés et de leurs procédés de fabrication, de sorte à satisfaire au mieux les exigences induites par les caractéristiques - faible contenance, petite taille, échantillon, usage unique ou en un petit nombre de fois, possibilité de petites séries - précédemment mentionnées. Il s'agit en particulier de dépasser les limites et de résoudre les problèmes de fabrication sur le site de conditionnement distant du site de plasturgie, qui reçoit les pièces faites sur ce dernier site, comme la limitation de la cadence et les conséquences de la perte d'alignement entre la tige et l'applicateur. Par ailleurs, il s'agit d'assurer une étanchéité du récipient-applicateur efficace, sûre et réalisée sans difficulté.

Partant d'un récipient-applicateur tel que celui du document EP 0 320 363, il s'agit en outre, notamment :
- d'éviter une pièce rigide monobloc formant enveloppe et essoreur et un essoreur essentiellement rigide,
- d'éviter une pièce monobloc capuchon-applicateur-tige et donc les limites inhérentes,
- de se dispenser de moyens d'association rigide amovible capuchon / partie restante du récipient-applicateur de type filets de vissage,
- d'obtenir une étanchéité efficace, sûre et réalisée avec moins de difficulté.

Partant d'un récipient-applicateur tel que celui du document US 2006/0102192, il s'agit en outre, notamment :
- de se dispenser de moyens d'association rigide amovible capuchon / partie restante du récipient-applicateur de type filets de vissage,
- d'éviter une étanchéité capuchon / partie restante du récipient-applicateur par serrage axial d'une collerette annulaire de l'essoreur et, plus généralement, d'assurer une étanchéité du récipient-applicateur efficace, sûre et réalisée sans difficulté.

Partant d'un récipient-applicateur tel que celui du document US 2012/0279876, il s'agit en outre, notamment, d'éviter la présence de crochets élastiques et d'un anneau périphérique coulissant.

Tel est le domaine de l'invention, tel est l'état de la technique et tels sont les problèmes techniques auxquels l'invention vise à apporter une solution.

Ci-après, un exposé de l'invention.

Selon un premier aspect, l'invention a pour objet, un récipient-applicateur à l'état assemblé, fermé et empli d'un contenu comme un produit cosmétique, et plus spécialement un mascara, un produit « eye-liner » ou un produit « lip-gloss », ayant une forme générale cylindrique allongée le long de son axe et qui comporte comme moyens :
- un réservoir de réception de contenu ayant une paroi axiale périphérique, une terminaison distale fermée par un fond et une terminaison proximale ouverte avec bord proximal,
- un capuchon de fermeture amovible, ayant une jupe axiale périphérique et une paroi sommitale, et un applicateur-tige, agencés de sorte que le capuchon et l'applicateur-tige forment un capuchon-applicateur-tige unitaire,
- une enveloppe formée par une paroi axiale périphérique, ayant une extrémité distale et une extrémité proximale ouverte, le réservoir et l'enveloppe ayant une longueur axiale commune réservoir / enveloppe,
- un essoreur annulaire ayant un bord distal ouvert formant une plus petite ouverture et un bord proximal ouvert formant une plus grande ouverture,
- des moyens d'interface comprenant des moyens d'association rigide fixe réservoir / enveloppe, des moyens d'association rigide amovible capuchon-applicateur-tige / partie restante du récipient-applicateur et des moyens d'étanchéité.

Ce récipient-applicateur est tel que l'essoreur est une pièce distincte de l'enveloppe, intégralement logé dans l'enveloppe, qui comporte une partie proximale semblable à une collerette saillante centrifuge et une partie distale semblable à un tronc de cône ou à un segment sphérique, qui est maintenu par des moyens d'association rigide fixe essoreur / réservoir-enveloppe. L'enveloppe comporte une extrémité distale ouverte, et un décrochement transversal formant un épaulement intérieur, et sa configuration est adaptée pour que, lors de la fabrication du récipient-applicateur, d'une part, l'essoreur puisse être introduit, à partir de son bord proximal, dans l'extrémité distale ouverte de l'enveloppe, puis guidé à coulissement axial dans l'enveloppe en direction proximale, d'autre part, le réservoir empli de contenu puisse être introduit, à partir de son bord proximal, dans l'extrémité distale ouverte de l'enveloppe, puis guidé à coulissement axial dans l'enveloppe en direction proximale. Le bord proximal de la collerette de l'essoreur est adjacent à l'épaulement intérieur. Le bord proximal du réservoir est adjacent au bord distal de la collerette. La collerette est en contact périphérique avec la face intérieure de l'enveloppe. La terminaison proximale du réservoir est intégralement logée dans l'enveloppe et elle est complémentaire de la face intérieure de l'enveloppe. La partie distale de l'essoreur et la terminaison proximale du réservoir sont en contact périphérique. L'essoreur est flexible.

Les moyens d'association rigide fixe essoreur / réservoir-enveloppe sont un serrage radial de l'essoreur sur la terminaison proximale du réservoir et sur l'enveloppe.

Le récipient-applicateur comporte des moyens d'association rigide fixe temporaire essoreur / enveloppe alors que, lors de la fabrication, le réservoir n'est pas encore associé de façon rigide fixe à et dans l'enveloppe.

Le décrochement comporte un retour intérieur dirigé axialement dans la direction distale, de sorte à former une rainure annulaire ouverte en direction distale, dans laquelle est logée la collerette de l'essoreur. L'enveloppe comporte deux parties en prolongation axiale réunies par le décrochement : une partie distale extérieure de plus grand diamètre et une partie proximale intérieure de plus petit diamètre.

Les moyens d'association rigide amovible capuchon-applicateur-tige / partie restante du récipient-applicateur sont entre le capuchon-applicateur-tige et l'enveloppe, de type sans filetages et à maintien par contact surfacique périphérique de surfaces conjuguées du capuchon-applicateur-tige et de la partie proximale de l'enveloppe.

Le capuchon et l'applicateur-tige sont deux pièces distinctes, l'applicateur-tige peut être lui-même l'assemblage rigide fixe de plusieurs composants, avec des moyens d'association rigide fixe capuchon / applicateur-tige.

L'extrémité proximale de l'enveloppe est insérée entre la face de plus grand diamètre d'un col de l'applicateur-tige et la face intérieure en regard du capuchon.

Les moyens d'association rigide fixe réservoir / enveloppe comprennent un serrage radial de surfaces conjuguées en contact de la face de plus grand diamètre du réservoir et de la face intérieure de la partie distale de l'enveloppe. Selon une réalisation, ces moyens d'association comprennent un maintien axial réalisé avec une association bossage / creux, de la face de plus grand diamètre du réservoir et de la face intérieure de la partie distale de l'enveloppe.

Selon une réalisation, les moyens d'association rigide fixe réservoir / enveloppe comprennent, sur une partie proximale avec serrage de la longueur axiale commune réservoir / enveloppe adjacente au bord proximal du réservoir et à l'épaulement intérieur, un serrage radial de surfaces conjuguées en contact de la face de plus grand diamètre du réservoir et de la face intérieure de la partie distale de l'enveloppe, et dans lequel les parois du réservoir et de l'enveloppe présentent une conicité de dépouille en sorte que la face de plus grand diamètre du réservoir et la face intérieure de l'enveloppe ont entre elles un jeu radial sur une partie distale avec jeu de la longueur axiale commune réservoir / enveloppe, la longueur axiale commune comprenant la partie proximale avec serrage et la partie distale avec jeu. L'association bossage / creux est située axialement dans la partie proximale avec serrage.
Selon une autre réalisation, les moyens d'association rigide fixe réservoir / enveloppe comprennent, sur au moins substantiellement toute la longueur axiale commune réservoir / enveloppe, un serrage radial, moyennant une poussée axiale, de surfaces conjuguées en contact de la face de plus grand diamètre du réservoir et de la face intérieure de la partie distale de l'enveloppe. L'association bossage / creux est située axialement dans la partie distale de la longueur axiale commune réservoir / enveloppe vers le fond du réservoir.

Les moyens d'étanchéité comprennent un serrage radial périphérique avec étanchéité de l'essoreur sur la terminaison proximale du réservoir et sur l'enveloppe.

Les moyens d'étanchéité comprennent un serrage radial périphérique avec étanchéité de la collerette de l'essoreur avec la face intérieure de l'enveloppe, et de la partie distale de l'essoreur avec la face de plus petit diamètre de la terminaison proximale du réservoir.

Les moyens d'étanchéité comprennent un serrage radial périphérique avec étanchéité de l'essoreur avec la face du creux de la rainure du décrochement de l'enveloppe, plus particulièrement dans deux zones périphériques en regard.

Selon une réalisation, dans un couple de zones de face d'essoreur, de réservoir, d'enveloppe, en serrage radial périphérique avec étanchéité, l'une au moins des deux zones du couple présente une petite conicité pour un serrage radial périphérique avec étanchéité par suite d'une poussée axiale lors de la fabrication.

Selon une caractéristique, les moyens d'étanchéité comprennent également un serrage radial avec étanchéité du capuchon-applicateur-tige sur l'extrémité proximale de l'enveloppe, moyennant une poussée axiale lors de la fermeture du récipient-applicateur, par exemple, entre la face de plus grand diamètre d'un col de l'applicateur-tige et la face de plus petit diamètre de l'extrémité proximale de l'enveloppe, en sorte que le col pénètre à l'intérieur de l'enveloppe.

Selon les réalisations, le fond du réservoir est positionné par rapport au bord distal de l'enveloppe de façon coplanaire, de sorte que le fond ferme l'ouverture distale de l'enveloppe, la longueur axiale commune réservoir / enveloppe correspondant à la longueur axiale du réservoir et correspondant à la longueur axiale de la partie distale de l'enveloppe, ou bien en-deçà, ou bien au-delà.

Selon une réalisation possible, le réservoir comprend une seule paroi périphérique qui assure la fonction de limiter l'espace recevant le contenu et participe à la fonction d'association rigide fixe réservoir / enveloppe. Selon une autre réalisation, le réservoir comprend, associées de façon rigide fixe, une première paroi axiale périphérique de plus petit diamètre à laquelle est associé le fond, qui participe à la fonction de limiter l'espace recevant le contenu, une seconde paroi axiale périphérique, de plus grand diamètre, qui participe à la fonction de solidarisation rigide fixe du réservoir avec l'enveloppe, et une paroi axiale périphérique de raccordement des parois de plus petit et de plus grand diamètre disposées radialement l'une en regard de l'autre et associées entre elles de façon rigide fixe.

Le capuchon-applicateur-tige et l'enveloppe peuvent comporter des moyens de positionnement angulaire relatif et/ou des moyens d'assistance à l'ouverture du récipient-applicateur, comme un ou plusieurs ensembles relief / creux ménagés respectivement sur le capuchon-applicateur-tige et sur l'enveloppe, coopérant activement pour le positionnement angulaire relatif et/ou l'assistance à l'ouverture du récipient-applicateur.

Le récipient-applicateur comporte cinq pièces distinctes assemblées les unes les autres, et des moyens d'interface d'association et d'étanchéité, à savoir le réservoir, le capuchon, l'applicateur-tige, l'enveloppe, et l'essoreur.

Selon un deuxième aspect, l'invention a pour objet un sous-ensemble unitaire capuchon-applicateur-tige-essoreur-enveloppe spécialement apte et destiné à former, lorsqu'il est assemblé de façon rigide fixe avec un réservoir empli de contenu, moyennant des moyens d'interface d'association rigide fixe et des moyens d'étanchéité, un récipient-applicateur assemblé, fermé et empli de contenu comme il a été précédemment décrit, ledit sous-ensemble ayant une forme générale cylindrique allongée le long de son axe et étant configuré de sorte qu'avec le réservoir ils puissent être imbriqués et emboîtés :
- qui comporte comme moyens :
   - un capuchon, ayant une jupe axiale périphérique et une paroi sommitale, et un applicateur-tige, agencés de sorte que le capuchon et l'applicateur-tige forment un capuchon-applicateur-tige unitaire,
   - une enveloppe comportant une paroi axiale périphérique, une extrémité distale ouverte, une extrémité proximale ouverte et un décrochement transversal vers l'axe formant un épaulement intérieur, et ayant une configuration adaptée pour que, lors de la fabrication, d'une part, l'essoreur puisse être introduit, à partir de son bord proximal, dans l'extrémité distale ouverte de l'enveloppe, puis guidé à coulissement axial dans l'enveloppe en direction proximale, d'autre part, le réservoir puisse être introduit dans l'extrémité distale ouverte de l'enveloppe, puis guidé à coulissement axial dans l'enveloppe en direction proximale,
   - un essoreur annulaire ayant un bord distal ouvert formant une plus petite ouverture et un bord proximal ouvert formant une plus grande ouverture, qui est une pièce distincte de l'enveloppe et intégralement logé dans elle, qui comporte une partie proximale semblable à une collerette saillante centrifuge et une partie distale semblable à un tronc de cône ou à un segment sphérique, avec le bord proximal de la collerette adjacent à l'épaulement, la collerette étant en contact périphérique avec la face intérieure de l'enveloppe,
   - des moyens d'interface comprenant des moyens d'association rigide amovible capuchon-applicateur-tige / enveloppe et des moyens d'association rigide fixe temporaire essoreur / enveloppe, et des moyens d'étanchéité,
- qui est fabriqué en tant que tel sous-ensemble unitaire et qui peut être stocké, transporté, manipulé et assemblé audit réservoir empli de contenu en sorte d'obtenir un récipient-applicateur à l'état assemblé, fermé et empli de contenu.

Un tel sous-ensemble unitaire capuchon-applicateur-tige-essoreur-enveloppe peut être réalisé selon telle ou telle réalisation ou présenter telle ou telle caractéristique précédemment décrite pour le récipient-applicateur.

Selon un troisième aspect, l'invention a pour objet un procédé de fabrication d'un récipient-applicateur à l'état assemblé, fermé et empli de contenu comme il a été précédemment décrit, dans lequel :
- on a à disposition, séparément, un sous-ensemble unitaire capuchon-applicateur-tige-essoreur-enveloppe, un réservoir de réception de contenu vide de contenu, et du contenu, le sous-ensemble unitaire capuchon-applicateur-tige-essoreur-enveloppe et le réservoir de réception de contenu étant configurés de sorte qu'ils puissent être assemblés de façon rigide fixe en étant imbriqués et emboîtés,
- puis on emplit le réservoir avec le contenu par l'ouverture de sa terminaison proximale,
- puis on imbrique, emboîte et associe de façon rigide fixe par coulissement axial le sous-ensemble unitaire capuchon-applicateur-tige-essoreur-enveloppe et le réservoir ainsi empli de contenu, de sorte à obtenir le récipient-applicateur à l'état assemblé, fermé et empli de contenu.

Selon une réalisation, en vue d'avoir à disposition le sous-ensemble unitaire capuchon-applicateur-tige-essoreur-enveloppe :
- on a à disposition, séparément, un capuchon et un applicateur-tige, une enveloppe, et un essoreur,
- puis on imbrique, emboîte et associe de façon rigide fixe par coulissement axial et poussée axiale d'association le capuchon, l'applicateur-tige, l'enveloppe et l'essoreur, de sorte à obtenir le sous-ensemble unitaire capuchon-applicateur-tige-essoreur-enveloppe, à savoir le capuchon et l'applicateur-tige étant imbriqués, emboîtés et associés, l'essoreur et l'enveloppe étant imbriqués, emboîtés et associés, et le capuchon avec l'applicateur-tige et l'enveloppe avec l'essoreur étant imbriqués, emboîtés et associés.

Selon les cas, on imbrique, emboîte et associe de façon rigide fixe par coulissement axial et poussée axiale d'association le capuchon, l'applicateur-tige, l'enveloppe et l'essoreur, soit en une seule opération commune d'imbrication, emboîtement et association soit en plusieurs opérations successives, le cas échéant moyennant une ou des opérations d'imbrication, emboîtement et association pour un sous-sous-ensemble.

Selon une caractéristique, on introduit l'essoreur à partir de son bord proximal dans l'enveloppe, on le guide à coulissement axial dans l'enveloppe en direction proximale jusqu'à ce qu'il soit maintenu associé à l'enveloppe de façon rigide fixe temporaire jusqu'à montage et association rigide du réservoir.

Selon une caractéristique, on introduit le réservoir à partir de son bord proximal dans l'enveloppe, on le guide à coulissement axial dans l'enveloppe en direction proximale jusqu'à venir en appui sur l'essoreur et on assure une poussée axiale réciproque d'association rigide.

Selon une caractéristique du procédé :
- sur un ou plusieurs sites de plasturgie, on a à disposition le sous-ensemble unitaire capuchon-applicateur-tige-essoreur-enveloppe et le réservoir de réception de contenu, vide de contenu,
- on transporte le sous-ensemble unitaire capuchon-applicateur-tige-essoreur-enveloppe et le réservoir de réception de contenu, vide de contenu sur un site de conditionnement pouvant être distant du ou des sites de plasturgie,
- et, sur le site de conditionnement, on emplit le réservoir avec le contenu et on imbrique, emboîte et associe de façon rigide fixe le sous-ensemble unitaire capuchon-applicateur-tige-essoreur-enveloppe et le réservoir ainsi empli de contenu.

Selon un quatrième aspect, l'invention a pour objet un outillage de fabrication par moulage de matière plastique par injection, apte et destiné à la mise en oeuvre du procédé de fabrication comme il a été précédemment décrit, dans lequel l'un au moins, en particulier tous les moule de fabrication de capuchon, de fabrication d'applicateur-tige ou du moins de tige, de fabrication d'enveloppe, de fabrication d'essoreur, et de fabrication de réservoir, sont des moules sans tiroirs.

Selon une réalisation, l'outillage de fabrication en vue de la réalisation d'une gamme de récipients-applicateurs d'une longueur hors-tout extérieure donnée, d'un diamètre hors-tout extérieur donné, et d'une contenance choisie dans une gamme de contenances, comprend un unique moule de fabrication de capuchon, un unique moule de fabrication d'applicateur-tige ou du moins de tige, un unique moule de fabrication d'enveloppe, un unique moule de fabrication d'essoreur, un unique moule de fabrication de réservoir, une gamme de broches, inserts ou analogue aptes à coopérer avec l'unique moule de fabrication d'applicateur-tige ou du moins de tige, de sorte à pouvoir fabriquer avec ledit moule des ensembles applicateur-tige ou du moins des tiges, d'une gamme de tailles (forme, diamètre, longueur) correspondant à la gamme de contenances des récipients-applicateurs et à la fonction d'application, une gamme de broches, inserts ou analogue aptes à coopérer avec l'unique moule de fabrication d'essoreur, de sorte à pouvoir fabriquer avec ledit moule, des essoreurs d'une gamme de tailles correspondant à la gamme d'applicateurs-tiges, une gamme de broches, inserts ou analogue aptes à coopérer avec l'unique moule de fabrication de réservoir, de sorte à pouvoir fabriquer avec ledit moule, des réservoirss d'une gamme de tailles correspondant à la gamme de contenances des récipients-applicateurs.

On décrit maintenant brièvement les figures des dessins.

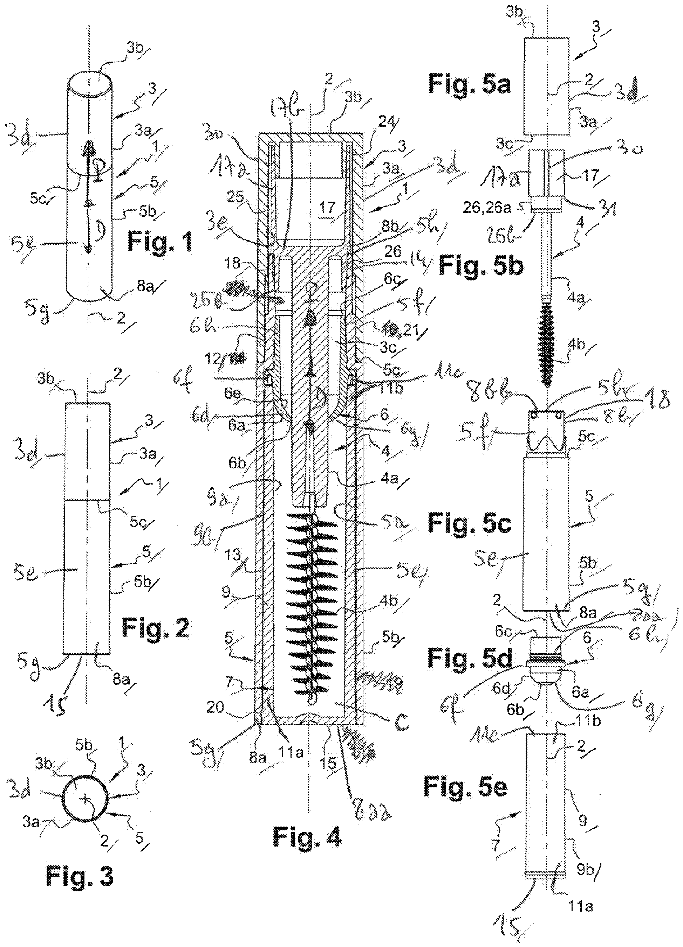

La figure 1 est une vue en perspective d'un récipient-applicateur selon l'invention, à l'état assemblé, fermé et empli de contenu, selon une première réalisation. Ici, le fond ferme l'ouverture distale de l'enveloppe, la longueur axiale commune réservoir / enveloppe correspondant à celle du réservoir et de la partie distale de l'enveloppe.
La figure 2 et la figure 3 sont deux vues du récipient-applicateur de la figure 1, respectivement en élévation et d'extrémité.
La figure 4 est une vue du récipient-applicateur des figures 1 à 3, en coupe axiale selon la ligne IV-IV de la figure 2, à plus grande échelle.
Les figures 5a, 5b, 5c, 5d et 5e sont cinq vues en élévation des cinq pièces distinctes constitutives du récipient-applicateur de la première réalisation, avant assemblage, à savoir, du haut en bas, le capuchon (figure 5a), l'applicateur avec tige d'association (figure 5b), l'enveloppe périphérique (figure 5c), l'essoreur (figure 5d) et le réservoir (figure 5e). Ces cinq figures sont présentées avec un axe commun vertical, qui est l'axe du récipient-applicateur comme représenté à la figure 4, leur disposition (de haut en bas et s'agissant du sens) reflétant la disposition des cinq pièces avant qu'elles ne soient assemblées. Pour la fabrication du récipient-applicateur à l'état assemblé, fermé et empli de contenu, on a à disposition, séparément, d'une part, un sous-ensemble unitaire capuchon-applicateur-tige-essoreur-enveloppe formé par l'assemblage par coulissement axial du capuchon de la figure 5a, de l'applicateur avec tige d'association de la figure 5b, de l'enveloppe périphérique de la figure 5c et de l'essoreur de la figure 5d, d'autre part, le réservoir de la figure 5e, et enfin du contenu, puis on emplit le réservoir avec le contenu, puis on imbrique, emboîte et associe de façon rigide par coulissement axial le sous-ensemble unitaire capuchon-applicateur-tige-essoreur-enveloppe et le réservoir ainsi empli de contenu.

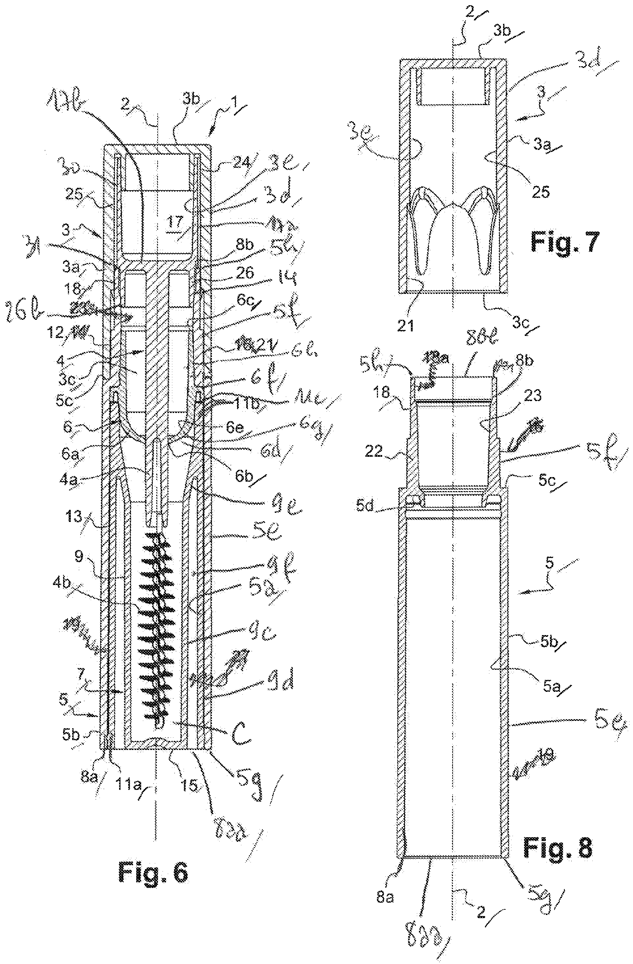

La figure 6 est une vue analogue à la figure 4 d'un récipient-applicateur selon une deuxième réalisation, dans laquelle le réservoir comprend, formant un ensemble solidaire, comme monobloc, une première paroi axiale périphérique et une seconde paroi axiale périphérique, disposées radialement l'une en regard de l'autre de façon concentrique et associées entre elles de façon rigide fixe. Dans cette réalisation, la longueur axiale commune réservoir / enveloppe correspond à celle du réservoir et à celle de la partie distale de l'enveloppe.
La figure 7 est une vue en coupe axiale d'une réalisation de capuchon et la figure 8 est une vue en coupe axiale d'une réalisation d'enveloppe périphérique, l'un et l'autre pouvant être mis en oeuvre pour une gamme de récipients-applicateurs d'une longueur hors tout extérieure donnée, d'un diamètre hors tout extérieur donné, et d'une contenance choisie dans une gamme de contenances.

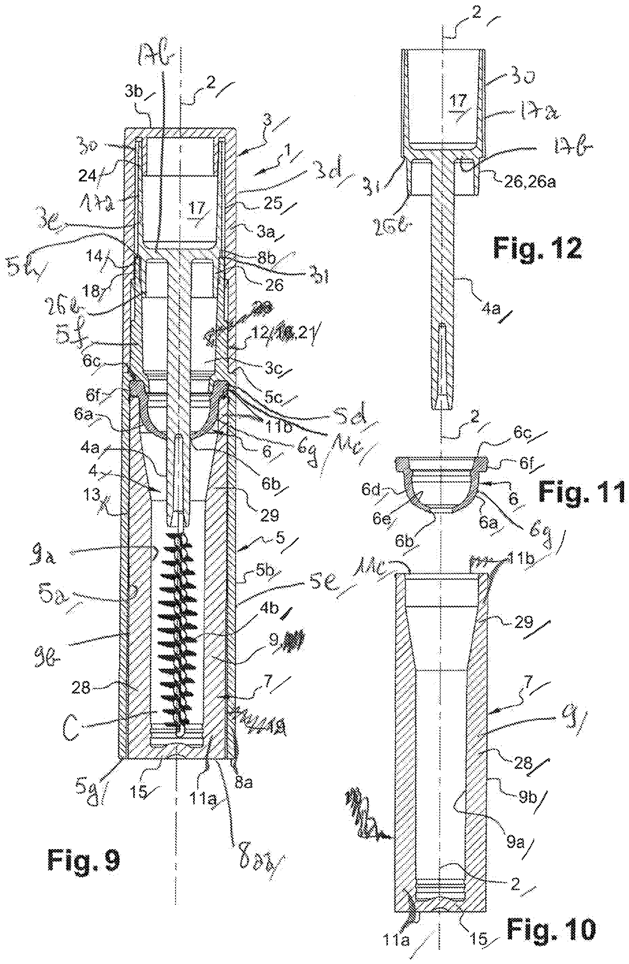

La figure 9 est une vue en coupe axiale d'un récipient-applicateur selon une troisième réalisation, de petite contenance - ici 1 ml - appartenant à la gamme de récipients-applicateurs d'une longueur hors tout extérieure donnée, d'un diamètre hors tout extérieur donné, et d'une contenance choisie dans une gamme de contenances. Dans cette réalisation, la longueur axiale commune réservoir / enveloppe correspond à celle du réservoir et à celle de la partie distale de l'enveloppe.
La figure 10 est une vue en coupe axiale du réservoir de la troisième réalisation de la figure 9.
La figure 11 est une vue en coupe axiale de l'essoreur de la troisième réalisation de la figure 9.
La figure 12 est une vue en coupe axiale de la tige de l'applicateur avec tige d'association de la troisième réalisation de la figure 9, l'organe applicateur en soi n'étant pas représenté.

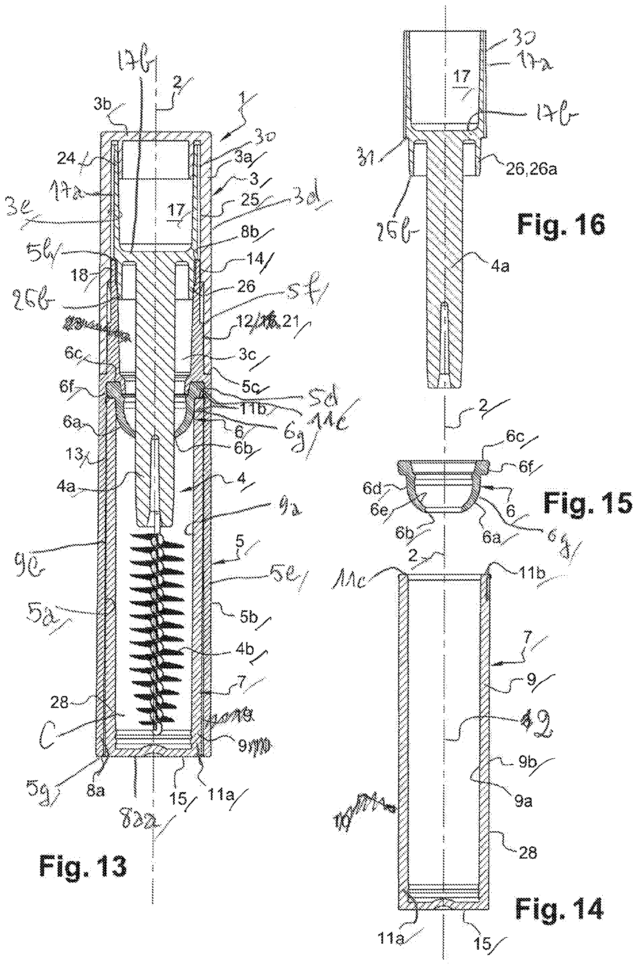

La figure 13 est une vue en coupe axiale d'un récipient-applicateur selon une quatrième réalisation, de plus grande contenance - ici 2 ml - appartenant à la gamme de récipients-applicateurs d'une longueur hors tout extérieure donnée, d'un diamètre hors tout extérieur donné, et d'une contenance choisie dans une gamme de contenances. Dans cette réalisation, la longueur axiale commune réservoir / enveloppe correspond à celle du réservoir et à celle de la partie distale de l'enveloppe.
La figure 14 est une vue en coupe axiale du réservoir de la quatrième réalisation de la figure 13.
La figure 15 est une vue en coupe axiale de l'essoreur de la quatrième réalisation de la figure 13.
La figure 16 est une vue en coupe axiale de la tige de l'applicateur avec tige d'association de la quatrième réalisation de la figure 13, l'organe applicateur en soi n'étant pas représenté.

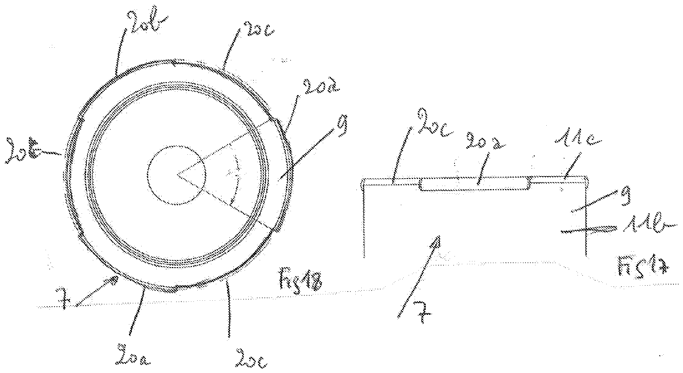

La figure 17 est une vue partielle en coupe axiale, à plus grande échelle, de la terminaison proximale du réservoir et la figure 18 une vue axiale de cette terminaison proximale, illustrant des bossages d'association rigide fixe du réservoir à l'enveloppe et des évents de prévention de pistonnage lorsque, pour la fabrication, on imbrique, emboîte et associe par coulissement axial le sous-ensemble unitaire capuchon-applicateur-tige-essoreur-enveloppe et le réservoir empli de contenu.

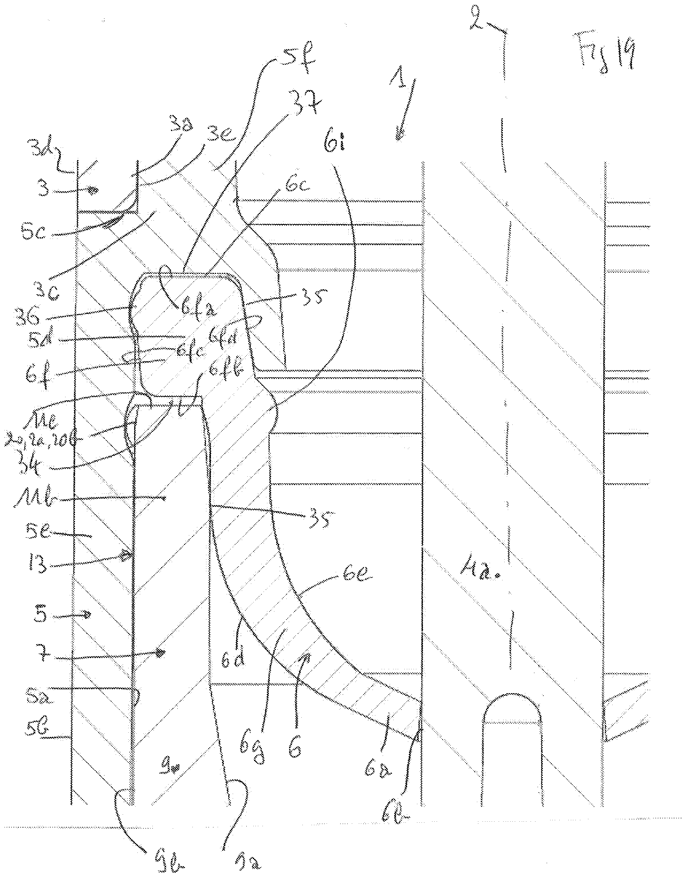

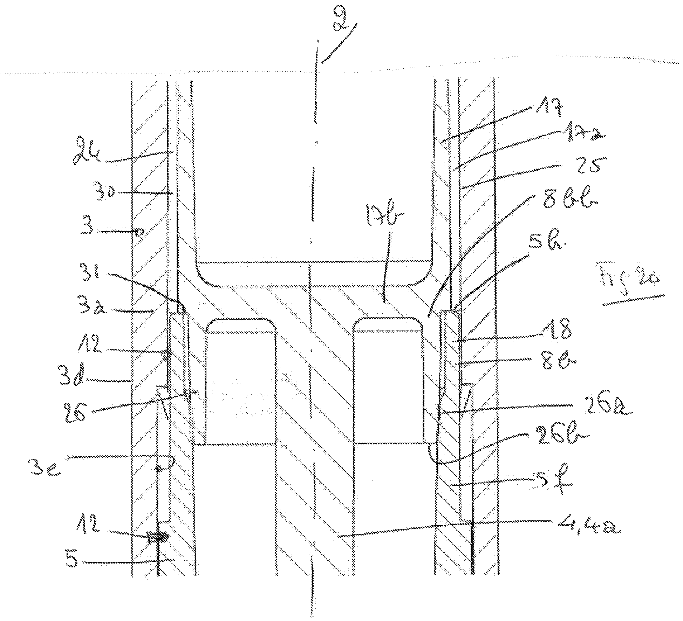

Les figures 19 et 20 sont deux vues partielles en coupe axiale, à plus grande échelle, respectivement, de l'enveloppe avec son décrochement et sa rainure, de la terminaison proximale du réservoir et de l'essoreur, et de l'enveloppe vers son extrémité proximale ouverte, et du capuchon-applicateur-tige illustrant, d'une part, des moyens d'étanchéité de type à serrage radial périphérique et, d'autre part, dans un couple de zones de faces en serrage radial périphérique, une petite conicité de l'une au moins des deux zones du couple.

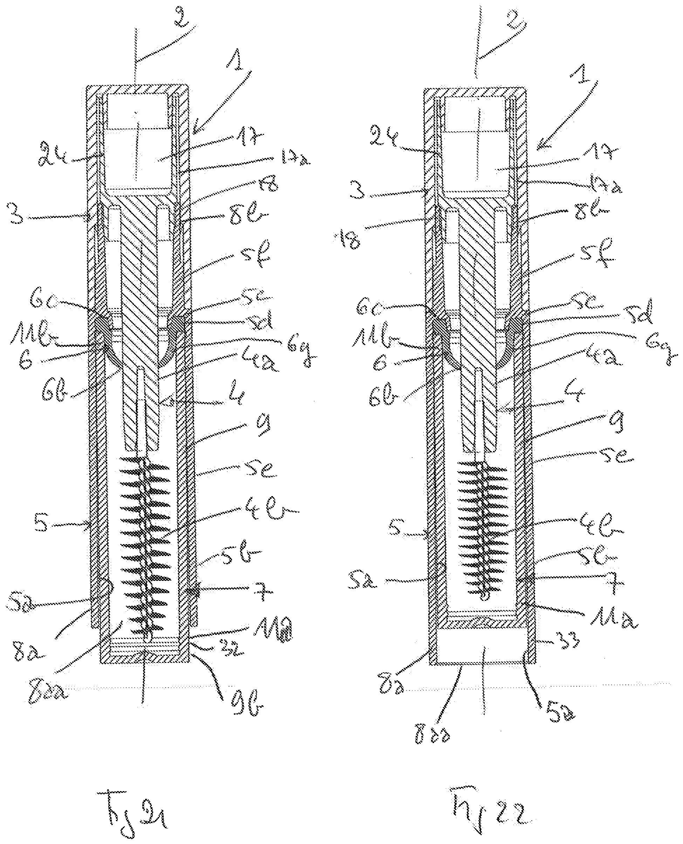

La figure 21 est une vue en coupe axiale d'un récipient-applicateur selon une cinquième réalisation, semblable à la quatrième, mais dans laquelle le fond du réservoir est positionné en-deçà du bord distal de l'enveloppe, de sorte que l'enveloppe dépasse axialement le réservoir dans la direction distale, la longueur axiale commune réservoir / enveloppe correspondant à celle du réservoir et étant plus petite que celle de la partie distale de l'enveloppe.
La figure 22 est une vue en coupe axiale d'un récipient-applicateur selon une sixième réalisation, semblable à la quatrième, mais dans laquelle le fond du réservoir est positionné au-delà du bord distal de l'enveloppe, de sorte que le réservoir dépasse axialement l'enveloppe dans la direction distale, la longueur axiale commune réservoir / enveloppe étant plus petite que celle du réservoir et correspondant à celle de la partie distale de l'enveloppe.

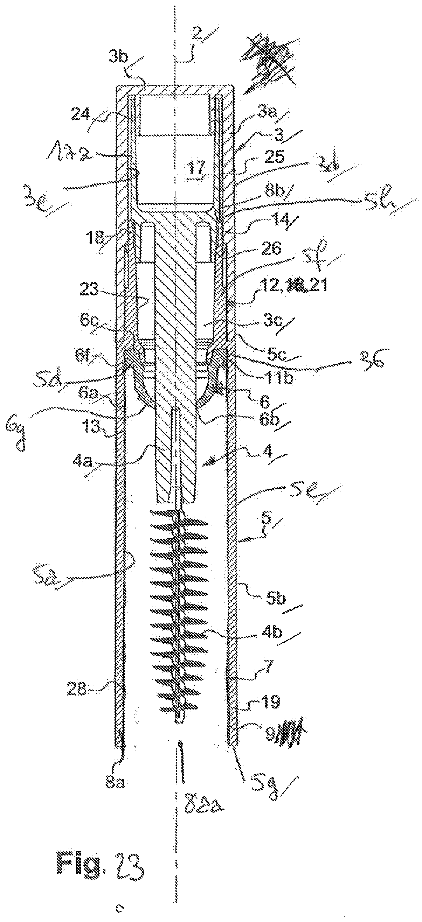

La figure 23 est une vue en coupe axiale d'un sous-ensemble unitaire capuchon-applicateur-tige-essoreur-enveloppe en vue de la réalisation d'un récipient-applicateur selon la quatrième réalisation de la figure 13, moyennant l'imbrication, l'emboîtement et l'association rigide fixe avec un réservoir empli de contenu.

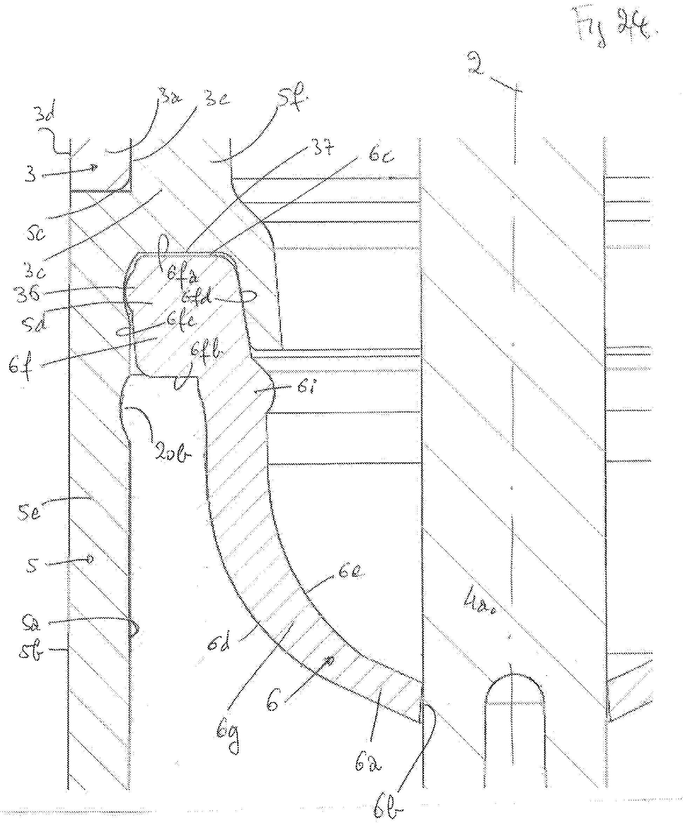

La figure 24 est une vue partielle en coupe axiale, à plus grande échelle de la figure 23.

Ci-après un exposé détaillé de plusieurs modes de réalisation de l'invention assorti d'exemples et de références aux dessins.

Un récipient-applicateur 1 conforme à l'invention est apte et destiné à un contenu C comme un produit cosmétique, et plus spécialement un mascara, un produit « eye-liner » ou un produit « lip-gloss », etc. Un tel contenu C est plus ou moins fluide ou pâteux et, lorsqu'il se trouve dans le récipient-applicateur 1 en formant une masse, il est possible d'en prélever une fraction au moyen d'un applicateur 4b faisant partie du récipient-applicateur 1, pour être appliqué sur la peau à l'emplacement souhaité, comme les yeux ou les lèvres. C'est dans un tel contexte que doivent être compris les expressions « récipient-applicateur » et « produit cosmétique ». Les caractéristiques « produit cosmétique », « mascara, eye-liner, lip-gloss », « plus ou moins fluide ou pâteux » ne sont pas limitatives, dès lors que le contenu C présente des propriétés de consistance et de préhension analogues sinon identiques à celles d'un tel produit cosmétique. Par exemple, le contenu C pourrait être un médicament, un produit de soin ou un produit de décoration ou de revêtement. L'expression « récipient-applicateur » se réfère au fait qu'il assure deux fonctions : d'une part, il contient le contenu C, d'autre part, il permet de l'appliquer.

Dans une application, le récipient-applicateur 1 est de faible contenance (et donc de faible quantité de contenu C) et de petite taille. Par là, il faut comprendre un volume utile de contenu C de l'ordre de 1 ml à 20 ml, une longueur totale de 60 mm à 200 mm, une longueur axiale de réservoir comprise entre 40 mm et 150 mm et un diamètre extérieur de l'ordre de 10 mm à 35 mm.

Le récipient-applicateur 1 à l'état assemblé, fermé et empli de contenu C (figures 1, 2, 4, 6, 9, 13, 21 et 22) a une forme générale extérieure cylindrique droite, allongée le long d'un axe 2, également commun aux figures 5a à 5e. Le terme « cylindrique » doit être compris comme définissant une forme exactement cylindrique ou bien une forme qui n'est que pseudo-cylindrique ou encore emprunte des formes cylindriques. Une telle forme cylindrique est définie par un segment générateur droit (ce qui inclut aussi un segment pseudo-droit) et une courbe directrice qui, selon les réalisations est circulaire (figure 3), ou ovale, ou polygonale ou pseudo-polygonale, avec des angles plus ou moins arrondis ou au contraire plus ou moins pointus. Les formes du réservoir 7, de l'enveloppe 5, du capuchon 3 et de la tige 4a de l'applicateur-tige 4 faisant partie du récipient-applicateur 1 sont, elles-aussi, cylindriques comme il vient d'être défini ou empruntent des formes cylindriques. L'essoreur 6 faisant partie du récipient-applicateur 1 a une forme annulaire compatible avec la forme cylindrique des pièces précédemment citées. L'applicateur 4b faisant partie du récipient-applicateur 1 s'inscrit dans une enveloppe de forme cylindrique comme il vient d'être défini ou emprunte des formes cylindriques, ou bien de forme conique, tronconique, ovoïde, ou de toute autre forme à la portée de l'homme du métier pour ce type de pièce.

Des formes reposant sur des courbes directrices non circulaires sont possibles dans la mesure où les opérations de fabrication, d'ouverture et de fermeture du récipient-applicateur 1 n'impliquent aucun mouvement de rotation relative de ses pièces 3, 4, 5, 6 et 7, mais uniquement des mouvements de coulissement axial relatif, et dans la mesure où le récipient-applicateur 1 ne comporte pas de filetages de vissage / dévissage.

Sur les figures, l'axe 2 est disposé verticalement et par suite le récipient-applicateur 1 est lui-aussi disposé verticalement. Mais le récipient-applicateur 1 peut se trouver dans toute autre disposition.

Le récipient-applicateur 1 associe plusieurs moyens fonctionnels - un moyen de fermeture amovible, un moyen d'application de contenu C, un moyen d'essorage, un moyen enveloppe, et un moyen de réception de contenu C -, réalisés avec cinq pièces distinctes qui, dans le récipient-applicateur 1 terminé, sont imbriquées, emboîtées et assemblées les unes aux autres : ces pièces se recouvrent au moins partiellement les unes les autres, des pièces en entourant d'autres, elles sont réunies et chacune est jointe à au moins une autre. Ces cinq pièces sont le capuchon 3, l'applicateur-tige 4, l'enveloppe 5, l'essoreur 6 et le réservoir 7.

Le réservoir 7 de réception de contenu a une paroi axiale périphérique 9 de forme générale cylindrique, creuse, avec une face de plus petit diamètre 9a intérieure et une face de plus grand diamètre 9b, une terminaison distale 11a fermée par un fond 15 et une terminaison proximale 11b ouverte avec un bord proximal 11c appartenant à la paroi 9. La paroi 9 peut être d'épaisseur constante et assez faible, dans la mesure où elle ne comporte pas de filetages. Le réservoir 7 délimite vers le fond 15 un espace pour le contenu C, où se trouve l'applicateur 4b.

Le capuchon 3 de fermeture, amovible, creux, a une jupe axiale périphérique 3a, de forme cylindrique, creuse, avec une face 3d extérieure et de plus grand diamètre et une face 3e intérieure et de plus petit diamètre, et une paroi sommitale transversale 3b et à l'opposé une ouverture 3c transversale, limitée par un bord libre d'ouverture. La jupe 3a peut être d'épaisseur constante et assez faible, dans la mesure où elle ne comporte pas de filetages. L'applicateur-tige 4 comporte une tige 4a - qui dans les réalisations représentées inclut une partie d'association 17 - et un applicateur 4b, la tige 4a et l'applicateur 4b étant en prolongation axiale mutuelle.
Le capuchon 3 et l'applicateur-tige 4 sont associés moyennant la partie d'association 17 de façon rigide fixe par des moyens 24 d'association rigide fixe capuchon 3 / applicateur-tige 4, et agencés de sorte à former un ensemble unitaire structurel capuchon-applicateur-tige 3-4 qui forme un tout pouvant être manipulé, déplacé, associé ou dissocié du reste du récipient-applicateur 1. Cet ensemble unitaire 3-4 assure la fermeture du récipient-applicateur 1, participe à l'étanchéité et enfin permet l'application de contenu C.

L'enveloppe 5 est formée (dans les réalisations représentées constituée) par une paroi axiale périphérique (la référence 5 désigne à la fois l'enveloppe que cette paroi), avec une extrémité distale 8a et une extrémité proximale 8b, qui, l'une et l'autre, sont terminées par un bord libre respectivement distal 5g et proximal 5h, et sont ouvertes jusqu'à la paroi 5 de sorte à former deux ouvertures respectivement distale 8aa et proximale 8bb. La paroi 5 est limitée, dans un plan transversal donné, par une face 5a de plus petit diamètre et une face 5b de plus grand diamètre. Sauf la possible exception de sa partie saillante 33 (réalisation de la figure 22), l'enveloppe 5 entoure périphériquement le réservoir 7. L'enveloppe 5 occupe une position fixe par rapport au réservoir 7.

L'essoreur 6, annulaire, creux, est distinct tant du réservoir 7 que de l'enveloppe 6. Il est une paroi 6a conformée de fabrication, avec un bord distal 6b, ouvert et formant une plus petite ouverture pour la fonction d'essorage, et un bord proximal 6c, ouvert et formant une plus grande ouverture. Les deux bords distal 6b et proximal 6c sont transversaux et écartés axialement. La paroi 6a est limitée par une face de plus grand diamètre 6d et une face de plus petit diamètre 6e. L'essoreur 6 est intégralement logé dans l'enveloppe 5 qui l'entoure périphériquement et il occupe une position fixe par rapport à elle. Il comporte une collerette annulaire 6f, saillante centrifuge, limitée par un bord proximal transversal 6fa, un bord distal transversal 6fb, un bord périphérique de plus grand diamètre 6fc et un bord périphérique de plus petit diamètre 6fd. La collerette annulaire 6f est une partie proximale de l'essoreur 6 qui comporte aussi une partie distale 6g également annulaire, semblable à un tronc de cône ou à un segment sphérique, comme une forme générale pseudo semi-hémisphérique dans les réalisations représentées. La partie distale 6g comporte le bord distal 6b et la plus petite ouverture de l'essoreur 6. Il peut être prévu un renflement annulaire 6i centripète sur la face de plus petit diamètre 6e sensiblement au droit du bord distal transversal 6fb.

Le réservoir 7 et l'enveloppe 5 sont imbriqués, emboîtés et assemblés avec une association rigide fixe et à demeure, de sorte à présenter une longueur axiale commune réservoir 7 / enveloppe 5.

Le récipient-applicateur 1 comprend également des moyens d'interface incluant des moyens d'association rigide fixe, des moyens d'association rigide amovible, des moyens d'association rigide fixe temporaire et des moyens d'étanchéité. Ainsi, les pièces 3, 4, 5, 6 et 7 constitutives du récipient-applicateur 1 sont associées entre elles de façon rigide fixe ou de façon rigide amovible ou de façon rigide temporaire, selon les pièces et les moments.

Le terme « association » doit être compris comme correspondant au fait de réunir structurellement.
L'expression « association rigide fixe », concernant deux pièces, doit être comprise comme signifiant que ces deux pièces sont solidarisées entre elles sans pouvoir être normalement dissociées ou sans avoir vocation à être dissociées, l'association en question étant donc permanente. Tel est le cas, par exemple du réservoir 7 et de l'enveloppe 5.
L'expression « association rigide amovible », concernant deux pièces, doit être comprise comme signifiant que ces deux pièces sont solidarisées entre elles en pouvant être dissociées car ayant vocation à être dissociées, au moins à certains moments. Tel est le cas du capuchon 3 (auquel est associé de façon rigide fixe l'applicateur-tige 4) relativement au reste du récipient-applicateur 1.
L'expression « association rigide fixe temporaire », concernant deux pièces, doit être comprise comme signifiant que ces deux pièces sont solidarisées entre elles sans pouvoir être dissociées mais de façon temporaire. Tel est le cas de l'essoreur 6 et de l'enveloppe 5 alors que, lors de la fabrication, le réservoir 7 n'est pas encore associé de façon rigide fixe à et dans l'enveloppe 5.

Les termes « extérieur » et « intérieur » doivent être compris comme qualifiant ce qui est normalement visible et invisible, respectivement, pour un observateur regardant le récipient-applicateur 1 assemblé et fermé.

Le terme « axial » doit être compris comme qualifiant ce qui est dans l'axe 2 ou parallèle (ou sensiblement parallèle) à lui ou s'étendant le long de lui, le terme « transversal » comme qualifiant ce qui est fortement sécant par rapport à l'axe 2, comme orthogonalement ou sensiblement orthogonalement, et le terme « radial » comme qualifiant ce qui s'étend dans une direction orthogonale ou sensiblement orthogonale par rapport à l'axe 2.

Les termes « terminaison » et « extrémité » utilisés en relation avec, respectivement, le réservoir 7 et l'enveloppe 5, doivent être compris comme désignant le tronçon axial qui termine la pièce correspondante à l'un de ses bouts.

Le terme « distal » doit être compris comme qualifiant un moyen éloigné ou le plus éloigné de la paroi sommitale 3b du capuchon 3 et le terme « proximal » comme qualifiant un moyen proche ou le plus proche de cette paroi 3b. Les flèches P et D des figures 1 et 4 illustrent les directions et sens proximal et distal, respectivement.

Le terme « périphérique » doit être compris comme qualifiant ce qui est autour ou sur le pourtour de l'axe 2.
Pour un moyen périphérique, comme une paroi par exemple, on distingue ce qui est « de plus petit diamètre », c'est-à-dire le plus proche de l'axe 2, de ce qui est « de plus grand diamètre », c'est-à-dire le plus éloigné de l'axe 2. Le terme « diamètre » ne doit pas être compris dans son acception mathématique étroite mais comme signifiant la dimension en direction radiale.

L'enveloppe 5, l'essoreur 6 et le réservoir 7 sont des pièces distinctes venues de fabrication monobloc, ce qui signifie que chacune d'elles est fabriquée séparément, directement en un seul bloc fini.
Le capuchon 3 est également une pièce distincte venue de fabrication monobloc.
En ce qui concerne l'applicateur-tige 4, selon les réalisations, il est formé d'une pièce distincte venue de fabrication ou de l'association rigide fixe de la tige 4a - incluant la partie d'association 17 - et de l'applicateur 4b.

L'invention a pour objet le récipient-applicateur 1 à l'état assemblé, fermé et empli de contenu C qui est celui dans lequel le récipient-applicateur 1 se trouve normalement pour la présentation et la vente à la clientèle. Dans cet état, toutes les pièces du récipient-applicateur 1 sont réunies et agencées entre elles de façon appropriée, le récipient-applicateur 1 étant fermé par le capuchon 3 et le réservoir 7 contenant du contenu C.

L'invention a également pour objet le récipient-applicateur 1 dans toute autre configuration. Celle où les pièces 3, 4, 5, 6 et 7 ne sont pas toutes assemblées ou sont partiellement assemblées, ou toutes désassemblées ou partiellement désassemblées. Celle où le récipient-applicateur 1 est ouvert, le capuchon-applicateur-tige 3-4 étant enlevé. Celle où le récipient-applicateur 1 est totalement ou partiellement vide de contenu C.

« Ouvert » se rapporte à la situation, la configuration, l'état où le capuchon 3 est dissocié du reste du récipient-applicateur 1, de sorte à ne pas obturer le réservoir 7. Dans cet état ouvert, l'applicateur-tige 4 - en ce qu'il fait partie du capuchon-applicateur-tige 3-4 unitaire -, est également dissocié du reste du récipient-applicateur 1 et il est sorti du réservoir 7. « Fermé » se rapporte à la situation, la configuration, l'état où le capuchon 3 est associé au reste du récipient-applicateur 1, de sorte à obturer le réservoir 7. Les termes « ouverture » et « fermeture » doivent être compris comme signifiant le passage, respectivement, de l'état fermé à l'état ouvert ou de l'état ouvert à l'état fermé. L'utilisateur procède à l'ouverture du récipient-applicateur 1 en vue de son utilisation, pour appliquer du contenu C. Il procède à sa fermeture entre deux utilisations, afin de protéger le contenu C et l'applicateur 44b.

L'invention a également pour objet le sous-ensemble 3+4+5+6 (figures 23 et 24) qui comporte le capuchon 3 et l'applicateur-tige 4 (ou le capuchon-applicateur-tige 3-4), l'enveloppe 5, et l'essoreur 6, mais non le réservoir 7. Dans un tel sous-ensemble, l'essoreur 6 est une pièce distincte de l'enveloppe 5 et est intégralement logé dans l'enveloppe 5. L'essoreur 6 est associé de façon rigide fixe temporaire à l'enveloppe 5 par les moyens d'association rigide fixe temporaire essoreur 6 / enveloppe 5, lors de la fabrication du sous-ensemble 3+4+5+6. Un tel sous-ensemble 3+4+5+6 est spécialement apte et destiné à constituer, lorsqu'il est imbriqué, emboîté et assemblé de façon rigide fixe avec un réservoir 7 empli de contenu C, le récipient-applicateur 1 à l'état assemblé, fermé et empli de contenu C. Un tel sous-ensemble 3+4+5+6 est en effet conçu de sorte à être fabriqué en tant que tel sous-ensemble unitaire par association rigide du capuchon 3, de l'applicateur-tige 4 (ou le capuchon-applicateur-tige 3-4), de l'enveloppe 5, et de l'essoreur 6, à être stocké, transporté, manipulé et mis en œuvre en tant que tel en vue de la fabrication du récipient-applicateur 1, comme indiqué.

L'invention a également pour objet le réservoir 7 en tant qu'il est spécialement apte et destiné à constituer, lorsqu'il est empli de contenu C, et imbriqué, emboîté et assemblé avec le sous-ensemble 3+4+5+6, le récipient-applicateur 1 à l'état assemblé, fermé et empli de contenu C. Un tel réservoir 7 est en effet conçu de sorte à être fabriqué en tant que tel, à être stocké, transporté, manipulé et mis en œuvre en tant que tel en vue de la fabrication du récipient-applicateur 1, comme indiqué.

Ledit sous-ensemble 3+4+5+6 et ledit réservoir 7 présentent les caractéristiques décrites par ailleurs en relation avec le récipient-applicateur 1.

Du fait de leurs conceptions et de l'absence de filetages, le capuchon 3, l'enveloppe 5, l'essoreur 6, le réservoir 7 et l'applicateur-tige 4 - ou du moins sa tige 4a incluant la partie d'association 17 -, peuvent être réalisés en matière plastique et fabriqués par injection au moyen de moules simples sans tiroirs.

Chacune des pièces que sont le capuchon 3, l'applicateur-tige 4, l'enveloppe 5, l'essoreur 6 et le réservoir 7, présente une tenue d'ensemble, c'est-à-dire que la pièce une fois fabriquée garde sa forme.

Chacune des pièces que sont le capuchon 3, l'enveloppe 5 et le réservoir 7 présente une certaine rigidité d'ensemble, étant réalisée en matière plastique assez dure, comme du polypropylène (en abrégé PP). L'expression « rigidité d'ensemble » doit ici être comprise comme signifiant que la pièce considérée, soumise à un effort ne dépassant pas celui résultant de son usage normal ou de l'usage normal du récipient-applicateur 1 par l'utilisateur, garde globalement la forme issue de sa fabrication, ce qui n'exclut pas qu'elle ait une légère déformation locale lors de la fabrication du récipient-applicateur 1 ou lors de son usage, comme par exemple son ouverture et sa fermeture. Une telle légère déformation locale est par exemple typiquement celle résultant de la coopération par coulissement d'un bossage et d'un creux complémentaires à des fins d'association.

L'applicateur-tige 4 présente la combinaison de rigidité d'ensemble et de souplesse connue de l'homme du métier pour ce type de pièce.

L'essoreur 6 est flexible, étant réalisé en matière plastique choisie à cet effet, comme par exemple le polyéthylène basse densité (en abrégé LDPE) ou un élastomère thermoplastique comme un vulcanisat thermoplastique (en abrégé TPV). Le terme « flexible » doit ici être compris comme signifiant une certaine souplesse de sorte à pouvoir être déformé dans la limite de ce qui est nécessaire lors de la fabrication du récipient-applicateur 1 ou lors de son usage, comme par exemple son ouverture et sa fermeture, et le passage à coulissement axial de la tige 4 et de l'applicateur 4b à travers l'essoreur 6. Dans une réalisation possible, il existe un jeu radial entre la tige 4a et le bord distal 6b limitant la plus petite ouverture de l'essoreur 6, sans que l'étanchéité du récipient-applicateur 1 en soit affectée.

La paroi sommitale 3b du capuchon 3 est l'une des deux extrémités du récipient-applicateur 1 dont l'autre est soit le fond 15 du réservoir 7 (figures 4, 6, 9, 13 et 21) soit la terminaison distale 11a de l'enveloppe 5 (figure 22). Sur les figures, la paroi sommitale 3b est placée en position supérieure et le fond 15 est placé en position inférieure. Par suite le récipient-applicateur 1 est disposé avec l'axe 2 vertical, le capuchon 3 en haut et le réservoir 7 en bas, mais comme indiqué, le récipient-applicateur 1 peut se trouver dans toute autre disposition. Le terme « fond 15 » n'est donc pas en soi limitatif d'une position inférieure.

Dans les réalisations représentées, la tige 4a - incluant la partie d'association 17 - et l'applicateur 4b qui, une fois associés de façon rigide fixe forment l'applicateur-tige 4, sont deux pièces distinctes, fabriquées séparément, assemblées et associées de façon rigide fixe, de sorte à être en prolongation mutuelle, l'applicateur 4b à l'opposé de la partie d'association 17. Par exemple, la tige 4a est pourvue d'un creux axial terminal dans lequel est monté axialement, de façon rigide fixe et à force, un tenon terminal de l'applicateur 4b. Cela permet, avec un seul type donné de tige 4a, d'utiliser une large gamme d'applicateurs 4b. Le cas échéant, il peut être prévu entre la tige 4a et l'applicateur 4b, une tigelle intermédiaire, de plus petit diamètre que la tige 4a, disposée au centre de l'applicateur 4b.

La tige 4a et l'applicateur 4b sont allongés axialement, de sorte que l'applicateur 4b puisse pénétrer dans le réservoir 7 jusque vers son fond 15. Le diamètre de la tige 4a - hors la partie d'association 17 - et le diamètre de l'applicateur 4b sont restreints, de sorte à pouvoir traverser l'ouverture de plus petit diamètre du bord distal 6b de l'essoreur 6.
La tige 4a peut faire l'objet de nombre de réalisations, en ce qui concerne notamment sa forme et son diamètre.

L'applicateur 4b peut, lui-aussi, faire l'objet de nombre de variantes de réalisations en ce qui concerne notamment sa constitution, ses caractéristiques, sa forme et sa taille. Il est choisi parmi une brosse, un pinceau, un embout souple ou rigide, ou tout autre organe d'application adapté, et cela selon les applications envisagées. Dans les réalisations où la tige 4a et l'applicateur 4b sont deux pièces distinctes associées de façon rigide fixe entre elles, l'applicateur 4b peut être choisi parmi ceux disponibles sur le marché en tant que composant.
Dans les réalisations représentées, l'applicateur 4b est du type brosse avec un support axial supportant des poils disposés transversalement et radialement, et terminé par le tenon d'association rigide à la tige 4a pourvue du creux complémentaire. Cependant, cette réalisation n'est pas limitative.

La partie d'association 17 est la partie appartenant à l'applicateur-tige 4 des moyens d'association 24 rigide fixe capuchon 3 / applicateur-tige 4. En effet, le capuchon 3 et l'applicateur-tige 4 n'ont pas à être dissociés l'un de l'autre une fois le récipient-applicateur 1 fabriqué et lorsque le récipient-applicateur 1 est utilisé. C'est ainsi que le capuchon 3 et l'applicateur-tige 4 forment l'ensemble unitaire capuchon-applicateur-tige 3-4.

La partie d'association 17 comprend une paroi axiale périphérique, de forme générale cylindrique et creuse. Son plus grand diamètre, correspondant à sa face périphérique de plus grand diamètre 17a, est plus grand que celui de la tige 4a, par exemple de l'ordre de 2 à 4 fois (cette caractéristique étant exemplative et non limitative).
La partie d'association 17 est rigidement solidaire de la tige 4a, à son extrémité, par l'intermédiaire d'une paroi transversale 17b, de part et d'autre de laquelle s'étendent axialement la partie d'association 17 et la tige 4a. Dans les réalisations représentées, la tige 4a, la partie d'association 17 et la paroi transversale 17b forment un ensemble monobloc venu de fabrication.

Les moyens 24 d'association rigide fixe capuchon 3 / applicateur-tige 4 sont la conjugaison d'une portion 25 de la face intérieure 3e de la jupe 3a du capuchon 3, vers sa paroi sommitale 3b, et de la face de plus grand diamètre 17a de la partie d'association 17. Aux tolérances constructives et d'assemblage près, ces deux faces 3e et 17a ont le même diamètre, de sorte à permettre d'abord l'introduction - moyennant une poussée axiale - de la partie d'association 17 par son extrémité libre, opposée à la tige 4a, dans le capuchon 3 par son ouverture 3c, sans espace radial entre eux, puis le coulissement axial relatif et ensuite l'association rigide fixe par contact périphérique des deux faces 3e et 17a. Cette introduction et ce coulissement sont réalisés à force. Dans les réalisations représentées, la portion 25 s'étend en direction axiale sur une partie substantielle de la longueur axiale du capuchon 3, par exemple de l'ordre du tiers ou de la moitié. Pour éviter un effet de pistonnage empêchant le coulissement axial, il est prévu sur la face intérieure 3e et/ou sur la face de plus grand diamètre 17a au moins une petite rainure axiale 30, débouchant à ses deux extrémités, formant évent.

Le terme « conjugué » - et ses déclinaisons comme « conjugaison » - appliqué à deux pièces, ou des parties de celles-ci, comme des faces, doit être compris comme un contact de ces deux pièces ou parties de pièces, propre à assurer une finalité d'association ou d'étanchéité.

L'expression « poussée axiale » appliquée à deux pièces doit être comprise comme un mouvement de coulissement axial relatif de celles-ci (déplacement de l'une des deux pièces ou bien des deux pièces), résultant de l'application sur celles-ci de forces axiales suffisantes, en vue de leur conjugaison. L'importance de la poussée axiale est adaptée à la finalité de la conjugaison.

Ainsi, un contact périphérique des deux faces axiales périphériques signifie que chacune de ces deux faces, coaxiales, comporte une (ou bien des) zones de contact, en contact avec une (ou bien des) zones de contact de l'autre face, cette (ou bien ces) zones de contact étant disposées à la périphérie de chacune de ces faces. Un tel contact périphérique est prévu avec une finalité d'association ou d'étanchéité.
Avec une finalité d'association, il peut être envisagé des zones de contact discontinues autour de l'axe 2, avec une ou plusieurs rainures axiales pour éviter un effet de pistonnage.
Le contact entre les zones de contact est adapté à l'association souhaitée (rigide fixe permanente ou bien rigide amovible ou bien rigide fixe temporaire).
Ainsi, pour une association rigide fixe permanente, le contact doit assurer un serrage radial suffisant. C'est ainsi que doit être compris l'expression « serrage radial ». L'introduction axiale et le coulissement axial résultant de la poussée axiale sont alors réalisés à force, de sorte à dépasser le frottement de contact entre les deux pièces.
Pour une association rigide amovible, le contact peut être à frottement plus ou moins doux ou plus ou moins dur, à la condition qu'il ne soit pas fixe, moyennant une action normale, comme par exemple celle exercée par l'utilisateur sur le capuchon 3 en vue de l'associer ou de le dissocier du reste du récipient-applicateur 1.
Dans le cas de l'étanchéité, chaque zone de contact doit être continue tout autour de l'axe 2 et le contact doit être étanche avec le degré souhaité, étant entendu que selon les cas, l'on a une association rigide fixe permanente (cas de l'essoreur 6) ou bien une association rigide fixe amovible (cas du capuchon 3).

L'ensemble tige 4a, partie d'association 17 et paroi transversale 17b comprend également, faisant partie de l'ensemble monobloc venu de fabrication, un col 26, rigidement solidaire de la tige 4a par l'intermédiaire de la paroi transversale 17b, par rapport à laquelle le col 26 s'étend axialement, jusqu'à son bord distal 26b, du même côté que la tige 4a qu'il entoure et du côté opposé de la partie d'association 17.
Le col 26 comprend une paroi axiale périphérique de forme générale cylindrique et creuse. Son plus grand diamètre, qui correspond à sa face périphérique de plus grand diamètre 26a, est très légèrement plus petit que celui de la face périphérique de plus grand diamètre 17a de la partie d'association 17 et plus grand que celui de la tige 4a, par exemple de l'ordre de 2 à 4 fois (cette caractéristique étant exemplative et non limitative). Ainsi, il existe entre les deux faces 26a et 17a un petit décrochement radial 31, formant butée axiale.
Dans la réalisation représentée, le col 26 s'étend en direction axiale sur une fraction de la longueur axiale du capuchon 3, par exemple de l'ordre de 1/5^{ème} à 1/7^{ème} (cette caractéristique étant exemplative et non limitative). Ainsi, dans le récipient-applicateur 1 assemblé et fermé, la jupe 3a s'étend axialement en direction distale bien au-delà du bord distal 26b du col 26, permettant d'y loger une partie d'enveloppe 5.

Moyennant un décrochement 5c, la paroi de l'enveloppe 5 est de forme générale cylindrique et creuse et délimite périphériquement un espace s'étendant axialement et radialement, dans lequel sont logés, à l'état fermé, le réservoir 7, l'essoreur 6, la tige 4a (sauf la partie d'association 17) et l'applicateur 4b et, à l'état ouvert, le réservoir 7 et l'essoreur 6.

L'extrémité distale 8a de l'enveloppe 5 est située vers le fond 15 du réservoir 7 et l'applicateur 4b lorsqu'il est disposé dans le réservoir 7. L'extrémité proximale 8b de l'enveloppe 5 est située dans le capuchon 3 à l'état fermé du récipient-applicateur 1. Elle est dégagée, visible et libre d'accès à l'état ouvert.

La paroi 5 de l'enveloppe, et donc l'enveloppe 5 elle-même, comporte le décrochement 5c, transversal, dont la partie intérieure à l'enveloppe 5 est dénommée épaulement, ce terme devant être compris comme signifiant un changement transversal du diamètre de la face de plus petit diamètre 5a de l'enveloppe 5 (par suite, la référence 5c désigne aussi bien le décrochement que l'épaulement).

Dans la réalisation des figures 4 et 6, le décrochement 5c forme un simple double coude.

Dans la réalisation des figures 9, 13, 19, 21 et 22, le décrochement 5c comporte un retour intérieur dirigé axialement dans la direction distale, de sorte à former une rainure 5d, annulaire, ouverte en direction distale.

Avec le décrochement 5c, l'enveloppe 5 est constituée de deux parties 5e et 5f en prolongation axiale réunies par le décrochement 5c et disposées respectivement de part et d'autre de lui.

La partie 5e est distale extérieure et de plus grand diamètre, sa face 5a de plus grand diamètre étant toujours extérieure. Y sont logés selon les réalisations, soit une partie (figures 4 et 6) soit tout (figures 9, 13, 19, 21 et 22) l'essoreur 6 et soit tout (figures 4, 6, 9, 13 et 22) soit une partie - exception faite d'une partie saillante 32 associée la terminaison distale 11a (figure 21) - du réservoir 7. Y sont également logés, à l'état fermé, une partie de la tige 4a attenante à l'applicateur 4a et l'applicateur 4b.

La partie 5f est proximale et de plus petit diamètre. Elle est située (en totalité dans les réalisations représentées) dans le capuchon 3 à l'état fermé, et dégagée, visible pour un observateur et libre d'accès à l'état ouvert, sa face 5b de plus grand diamètre étant intérieure à l'état fermé et extérieure à l'état ouvert. Y sont logés, à l'état fermé, une partie de la tige 4a attenante à la partie d'association 17, et dans la réalisation des figures 4 et 6, une partie de l'essoreur 6. A l'état ouvert, la partie 5f est dégagée, sauf la présence d'une partie de l'essoreur 6 dans la réalisation des figures 4 et 6, sa face 5a de plus petit diamètre étant soit totalement visible (figures 9, 13, 19, 21 et 22) soit partiellement visible (figures 4 et 6) pour un observateur regardant le récipient-applicateur 1 axialement par le bord libre proximal 5h.

La partie distale 5e et la partie proximale 5f s'étendent chacune sur une longueur axiale substantielle, la partie distale 5e étant plus longue, dans les réalisations représentées, que la partie proximale 5f, par exemple plusieurs fois plus longue (comme de l'ordre de 3 à 5 fois, cette caractéristique étant exemplative et non limitative).

Dans les réalisations représentées, l'épaisseur radiale du décrochement 5c est égale ou sensiblement égale à l'épaisseur de la paroi 5. Ainsi, la face 5b de plus grand diamètre de la partie proximale 5f est la face 5a de plus petit diamètre de la partie distale 5e sont alignées ou sensiblement alignées.

L'enveloppe 5 s'étend sur une longueur axiale qui représente une fraction importante de la longueur axiale du récipient-applicateur 1, comme de l'ordre de 0,7 à 0,9 (cette caractéristique étant exemplative et non limitative). L'enveloppe 5 s'étend sur une longueur axiale qui est plus longue que la longueur axiale du capuchon 3, comme de l'ordre de 1,5 à 3 fois plus longue (cette caractéristique étant exemplative et non limitative).

Si ce n'est une portion amincie terminale proximale 18 vers son extrémité proximale 8b, la paroi de l'enveloppe 5 peut être d'épaisseur constante et assez faible, dans la mesure où elle ne comporte pas de filetages.

Sauf s'il est prévu une partie saillante 32 (figure 21), le réservoir 7 est entouré périphériquement par l'enveloppe 5 et occupe une position fixe par rapport à elle. L'enveloppe 5, plus précisément sa partie distale 5e, et le réservoir 7 sont ajustés l'un à l'autre, c'est-à-dire que la face 5a de plus petit diamètre de la partie distale 5e de l'enveloppe 5 et la face de plus grand diamètre 9b du réservoir 7 sont ajustées l'une à l'autre.

Le fond 15 est relié à la terminaison distale 11a de la paroi 9, en formant un angle, sans présence de rigole périphérique.

La face 9a de plus petit diamètre, et intérieure, de la paroi 9 est lisse et dépourvue d'arête ou de cavité qui serait de nature à empêcher de prélever le contenu C.

Dans la réalisation des figures 4, 6, 9 et 13, le fond 15 est positionné par rapport au bord libre distal 5g de l'enveloppe 5 de façon coplanaire, de sorte à fermer son ouverture distale 8aa. La longueur axiale commune réservoir 7 / enveloppe 5 correspond à la longueur axiale du réservoir 7 et à celle de la partie distale 5e de l'enveloppe 5, aux jeux de montage près et à l'épaisseur axiale de la collerette annulaire 6f de l'essoreur 6 près.

Dans la réalisation de la figure 21, le fond 15 du réservoir 7 est positionné au-delà du bord libre distal 5g de l'enveloppe 5, de sorte à dépasser axialement l'enveloppe 5 dans la direction distale en formant la partie saillante 32 associée à la terminaison distale 11a. La longueur axiale commune réservoir 7 / enveloppe 5 est plus petite que la longueur axiale du réservoir 7 et correspond à la longueur axiale de la partie distale 5e de l'enveloppe 5, aux jeux de montage près et à l'épaisseur axiale de la collerette annulaire 6f de l'essoreur 6 près.

Dans la réalisation de la figure 22, le fond 15 du réservoir 7 est positionné en-deçà du bord libre distal 5g de l'enveloppe 5, l'enveloppe 5 dépassant axialement le réservoir 7 dans la direction distale en formant une partie saillante 33 associée à l'extrémité distale 8a. La longueur axiale commune réservoir 7 / enveloppe 5 correspond à la longueur axiale du réservoir 7 et elle est plus petite que la longueur axiale de la partie distale 5e.

Lorsque le fond 15 ferme l'ouverture distale 8aa ou dépasse axialement l'enveloppe 5, il est conçu plat dans son ensemble, de sorte à pouvoir former une face d'appui vertical du récipient applicateur 1.

La face de plus grand diamètre 9b du réservoir 7 est une face intérieure, sauf pour l'éventuelle partie saillante 32. Si celle-ci est transparente ou translucide, cette partie saillante 32 peut permettre, le cas échéant, de visualiser le contenu C ou de détecter sa présence ou son absence.

Le réservoir 7 est placé de façon coaxiale dans le creux de la partie distale 5e de l'enveloppe 5 disposée de façon périphérique, moyennant une association rigide fixe entre eux. La configuration de l'enveloppe 5 est adaptée pour que, lors de la fabrication du récipient-applicateur 1, le réservoir 7 empli de contenu C puisse être introduit, à partir de son bord libre proximal 11c, dans l'extrémité distale ouverte 8a de l'enveloppe 5, par son bord libre distal 5g et donc dans son ouverture distale 8aa, puis guidé à coulissement axial dans l'enveloppe 5 en direction proximale.

Dans les réalisations des figures 4, 9, 13, 21 et 22, le réservoir 7 comprend une et une seule paroi axiale périphérique 9 qui assure la fonction de limiter l'espace recevant le contenu C, participe à la fonction d'association rigide fixe réservoir 7 / enveloppe 5 et à l'étanchéité.

Dans la réalisation de la figure 6, le réservoir 7 comprend une première paroi 9c et une seconde paroi 9d. Ces deux parois 9c et 9d, axiales périphériques, de forme générale cylindrique et creuse, sont disposées radialement l'une en regard de l'autre de façon concentrique et sont associées rigidement entre elles par une paroi périphérique de raccordement 9e de sorte à former un ensemble solidaire, venu de fabrication monobloc.

La paroi 9c est de plus petit diamètre et il lui est associé le fond 15. Cette paroi 9c participe à la fonction de limiter l'espace recevant le contenu C.

La paroi 9d est de plus grand diamètre. Cette paroi 9d entoure radialement la paroi 9c moyennant l'existence entre elles d'un espace 9f annulaire s'étendant radialement et axialement. La paroi 9d participe à la fonction de solidarisation rigide fixe du réservoir 7 avec l'enveloppe 5.
La paroi de raccordement 9e relie les parois 9c et 9d. Elle s'étend sur une certaine longueur axiale. Son diamètre le long de l'axe 2 est le plus petit au raccordement rigide fixe avec la paroi 9c de plus petit diamètre et le plus grand au raccordement rigide fixe avec la paroi 9d de plus grand diamètre. La paroi de raccordement 9e a donc un diamètre croissant de son bord distal à son bord proximal.
La paroi de raccordement 9e prolonge axialement la paroi 9c de plus petit diamètre à partir de son bord de raccordement opposé au fond 15, dans la direction proximale. La paroi de raccordement 9e dérive, moyennant une inclinaison par rapport à l'axe 2, et en direction distale, de la paroi 9d de plus grand diamètre un peu à l'écart du bord libre proximal 11 c du réservoir 7, de sorte à ne pas gêner l'essoreur 6. Ainsi, l'essoreur 6 peut venir au contact de la face de plus petit diamètre de la paroi 9d de plus grand diamètre.

Dans la réalisation de la figure 6, le fond 15 et la terminaison distale 11a sont coplanaires. La longueur axiale de la paroi 9d de plus grand diamètre correspond à la somme de la longueur axiale de de la paroi 9c de plus petit diamètre et de la paroi de raccordement 9e.

Dans une réalisation qui s'apparente à celle de la figure 21, le fond 15 est positionné au-delà de la terminaison distale 11a. Dans la réalisation qui s'apparente à celle de la figure 22, le fond 15 est positionné en-deçà de la terminaison distale 11a.

Dans le récipient-applicateur 1 assemblé, l'extrémité proximale 8b de l'enveloppe 5 (et son bord libre proximal 5h) et la terminaison proximale 11b du réservoir 7 (et son bord libre proximal 11c) sont décalés en direction axiale, l'enveloppe 5 s'étendant au-delà du bord libre proximal 11c du réservoir 7 en formant la partie proximale 5f. Dans une partie de ce décalage axial, se trouve la collerette 6f de l'essoreur 6.

Les expressions « moyen d'essorage » et « essoreur » sont bien connues et comprises de l'homme du métier des dispositifs applicateurs pour produits cosmétiques. Un tel moyen d'essorage ou un tel essoreur comporte une ouverture restreinte pour l'applicateur 4b.

Dans la réalisation des figures 9, 11, 13, 15, 19, 21 et 22, l'essoreur 6 - et donc la paroi 6a qui le forme - comporte essentiellement la collerette annulaire 6f et la partie distale 6g. C'est alors la collerette 6f, et plus spécialement son bord proximal transversal 6fa, qui forme le bord proximal 6c de l'essoreur 6 qui comprend sa plus grande ouverture. La collerette 6f peut donc être qualifiée de proximale, de façon absolue.

Dans la réalisation des figures 4, 5d et 6, l'essoreur 6 - et donc la paroi 6a qui le forme - comporte également une partie plus proximale 6h formant col. Ce col 6h est de forme générale cylindrique et creux. Il s'étend en direction axiale proximale à partir de la collerette 6f, laquelle est donc alors interposée entre la partie distale 6g et le col 6h. C'est alors le bord libre du col 6h opposé à la collerette 6f qui forme le bord proximal 6c qui comprend la plus grande ouverture de l'essoreur 6. La collerette 6f peut toujours être qualifiée de proximale, mais de façon relative par rapport à la partie distale 6g.

Lors de l'introduction de l'applicateur 4b dans le réservoir 7, par coulissement axial, pour prélever du contenu C, l'applicateur 4b franchit d'abord la plus grande ouverture délimitée par le bord proximal 6c, puis la plus petite ouverture délimitée par le bord distal 6b, ce qui ne pose pas de difficulté du fait de la forme générale semblable à un tronc de cône ou à un segment sphérique de la partie distale 6g. Lors de l'extraction de l'applicateur 4b chargé de contenu C du réservoir 7, il franchit d'abord la plus petite ouverture délimitée par le bord distal 6b, ce qui assure la fonction d'essorage, puis la plus grande ouverture délimitée par le bord proximal 6c.

Le récipient-applicateur 1 comporte en outre les moyens d'interface suivants :
- moyens 12 d'association rigide amovible du capuchon 3 (avec l'applicateur-tige 4) à la partie restante du récipient-applicateur 1, dénommés « moyens 12 d'association capuchon 3 / reste du récipient-applicateur 1 »,
- moyens 13 d'association rigide fixe du réservoir 7 dans l'enveloppe 5, dénommés « moyens 13 d'association réservoir 7 / enveloppe 5 »,
- moyens 35 d'association rigide fixe permanente de l'essoreur 6 par rapport au réservoir 7 et à l'enveloppe 5, dénommés « moyens d'association essoreur 6 / réservoir 7-enveloppe 5 »,
- moyens 36 d'association rigide fixe temporaire de l'essoreur 6 à l'enveloppe 5, alors que, lors de la fabrication du récipient-applicateur 1, le réservoir 7 n'a pas encore été associé de façon rigide fixe permanente à l'enveloppe 5, dénommés « moyens d'association temporaire essoreur 6 / enveloppe 5 »,
- moyens 24 d'association rigide fixe capuchon 3 / applicateur-tige 4, précédemment décrits, et
- moyens 14 d'étanchéité.

Les moyens 12 d'association capuchon-applicateur-tige 3-4 / reste du récipient-applicateur 1 sont entre le capuchon-applicateur-tige 3-4 et l'enveloppe 5. Ils sont de type sans filetages d'ouverture et fermeture par rotation. Ils sont par contact périphérique de surfaces conjuguées du capuchon-applicateur-tige 3-4 et de la partie proximale de l'enveloppe 5, moyennant une poussée axiale.

Ainsi, une portion 21 de la face intérieure 3e de la jupe 3a du capuchon 3, attenante à son ouverture 3c, et s'étendant sur une certaine distance en direction axiale est conjuguée de la face extérieure de plus grand diamètre 5b de la partie proximale 5f de l'enveloppe 5. Cette conjugaison est apte à permettre et à assurer, d'abord, l'introduction axiale du capuchon 3 sur la partie proximale 5f de l'enveloppe 5 en vue de la fermeture du récipient-applicateur 1, ensuite, leur maintien réciproque par frottement, en l'absence de sollicitations extérieures de désengagement, afin que le récipient-applicateur 1 reste fermé, et enfin, leur désengagement en vue de l'ouverture et de l'utilisation du récipient-applicateur 1, moyennant une traction suffisante de l'utilisateur.

Dans les réalisations représentées, le bord libre d'ouverture limitant l'ouverture 3c du capuchon 3 est adjacent, aux jeux de montage près, au décrochement 5c de l'enveloppe 5. L'épaisseur radiale de la jupe 3a est sensiblement égale à celle du décrochement 5c, de sorte que le capuchon 3 et la partie distale 5e de l'enveloppe 5 aient des faces extérieures situées dans le prolongement l'une de l'autre, sans décalage notable.

Les moyens 12 d'association capuchon-applicateur-tige 3-4 / reste du récipient-applicateur 1 peuvent aussi comprendre la conjugaison de la face de plus grand diamètre 26a du col 26 et la face de plus petit diamètre de la portion amincie terminale proximale 18 de l'enveloppe 5, moyennant une poussée axiale. Par suite, la portion amincie terminale 18 - et donc l'extrémité proximale 8b de l'enveloppe 5 - est insérée entre la face de plus grand diamètre 26a du col 26 et la zone de la face intérieure 3e de la jupe 3a du capuchon 3 située en regard.

Dans certaines réalisations, le capuchon 3 et l'enveloppe 5 peuvent comporter des moyens de position angulaire relatif, comme une ou plusieurs ensembles relief / creux ménagés sur le capuchon-applicateur-tige 3-4 et sur l'enveloppe 5, qui en coopérant assurent le positionnement angulaire relatif. Cela permet un alignement des mentions ou décors réalisés sur les faces extérieures du capuchon 3 et de l'enveloppe 5. Ou bien le capuchon 3 et l'enveloppe 5 peuvent comporter des moyens d'assistance à l'ouverture du récipient-applicateur 1, comme un ou plusieurs ensembles relief / creux ménagés sur le capuchon-applicateur-tige 3-4 et sur l'enveloppe 5.

Le réservoir 7 et l'enveloppe 5 sont ajustés l'un à l'autre, c'est-à-dire qu'aux tolérances constructives et de montage près, la face de plus grand diamètre 9b du réservoir 7 et la face de plus petit diamètre 5a de la partie distale 5e de l'enveloppe 5 ont un même diamètre, de sorte à permettre d'abord l'introduction - moyennant une poussée axiale - du réservoir 7 par sa terminaison proximale 11b et son bord libre proximal 11c, dans l'enveloppe 5 par son extrémité distale 8a ouverte, par son bord libre distal 5g et donc dans son ouverture distale 8aa, puis leur coulissement relatif en direction proximale et enfin leur association rigide fixe par serrage radial de leurs surfaces conjuguées. Dans les réalisations représentées, la face de plus grand diamètre 9b et la face de plus petit diamètre 5a sont lisses, de sorte à permettre l'introduction et le coulissement dans toute position angulaire relative du réservoir 7 et de l'enveloppe 5 ayant un contour circulaire.

Les moyens 13 d'association réservoir 7 / enveloppe 5 comprennent, de façon générale fonctionnelle, un serrage radial, moyennant une poussée axiale, de surfaces conjuguées en contact de la face de plus grand diamètre 9b du réservoir 7 et de la face de plus petit diamètre 5a de la partie distale 5e de l'enveloppe 5.

Les moyens 13 d'association rigide fixe réservoir 7 / enveloppe 5 peuvent comprendre aussi un maintien axial relatif du réservoir 7 et de la partie distale 5e, réalisé avec une association bossage / creux 20, comportant un bossage de la face 9b du réservoir 7 et un creux de la face 5a de la partie distale 5e, située dans la longueur axiale commune réservoir 7 / enveloppe 5, moyennant la poussée axiale pour le serrage radial. Une telle association bossage / creux 20 peut faire l'objet de nombre de réalisations. Une telle association bossage / creux 20 définit la position axiale relative exacte du réservoir 7 par rapport à l'enveloppe 5, de sorte que le bord libre proximal 11c du réservoir 7 n'a pas à venir en contact axial sur une autre pièce du récipient-applicateur 1, un petit jeu axial 34 existant entre le bord libre proximal 11c du réservoir 7 et la collerette 6f de l'essoreur 6 (figure 19).

Dans les réalisations des figures 9, 10, 13, 14, 17, 18, 21 et 22, les moyens 13 d'association rigide fixe réservoir 7 / enveloppe 5 comprennent, sur une partie proximale avec serrage de la longueur axiale commune réservoir 7 / enveloppe 5 adjacente au bord libre proximal 11c du réservoir 7 et à l'épaulement intérieur 5c, le serrage radial précédemment indiqué, moyennant une poussée axiale, de surfaces conjuguées en contact de la face de plus grand diamètre 9b du réservoir 7 et de la face de plus petit diamètre 5a de la partie distale 5e de l'enveloppe 5. Dans ce cas, la paroi 9 du réservoir 7 et la paroi de la partie distale 5e présentent une conicité de dépouille en sorte que la face de plus grand diamètre 9b et la face de plus petit diamètre 5a ont entre elles un jeu radial sur une partie distale avec jeu de la longueur axiale commune réservoir 7 / enveloppe 5. Ainsi, la longueur axiale commune réservoir 7 / enveloppe 5 comprend la partie proximale avec serrage et la partie distale avec jeu. Le jeu radial dont il est ici question est très petit et pratiquement indétectable par l'utilisateur. L'association bossage / creux 20 est alors située dans la partie proximale avec serrage, comme il est illustré par les figures 17, 18 et 19 qui montrent la terminaison proximale 11b du réservoir 7. Sur le bord libre proximal 11c du réservoir 7, il est prévu plusieurs bossages transversaux centrifuges 20a espacés périphériquement les uns des autres par des zones sans bossage, coopérant avec un ou des creux 20b ménagés sur la face de plus petit diamètre 5a de la partie distale 5e de l'enveloppe 5 et vers l'épaulement intérieur 5c. Les zones sans bossage entre les bossages transversaux centrifuges 20a forment des évents 20c de prévention de pistonnage lorsque, pour la fabrication, on imbrique, emboîte et associe de façon rigide fixe par coulissement axial le sous-ensemble unitaire capuchon-applicateur-tige-essoreur-enveloppe 3+4+6+5 et le réservoir 7 empli de contenu C.

Dans les réalisations des figures 4 et 6, les moyens d'association rigide fixe réservoir 7 / enveloppe 5 comprennent, sur au moins substantiellement toute la longueur axiale commune réservoir 7 / enveloppe 5, un serrage radial, moyennant une poussée axiale, de surfaces conjuguées en contact de la face de plus grand diamètre 9b du réservoir 7 et de la face de plus petit diamètre 5a de la partie distale 5e de l'enveloppe 5. Dans ce cas, une association bossage / creux 20 peut être située dans la partie distale de la longueur axiale commune réservoir 7 / enveloppe 5 vers le fond 15 du réservoir 7.

La configuration de l'enveloppe 5 est adaptée pour que, lors de la fabrication du récipient-applicateur 1, l'essoreur 6 puisse être introduit, à partir de son bord proximal 6c, dans l'extrémité distale ouverte 8a de l'enveloppe 5, par son bord libre distal 5g et donc dans son ouverture distale 8aa, puis guidé à coulissement axial dans l'enveloppe 5 en direction proximale.

Avec la fabrication du sous-ensemble 3+4+5+6, l'essoreur 6 est maintenu par des moyens 36 d'association rigide fixe temporaire à l'enveloppe 5, alors que le réservoir 7 empli de contenu C n'est alors pas encore associé de façon rigide fixe à l'enveloppe 5 du sous-ensemble 3+4+5+6. Lors de la fabrication du récipient-applicateur 1, par association rigide fixe à l'enveloppe 5 du sous-ensemble 3+4+5+6 du réservoir 7 empli de contenu C, l'essoreur 6 est maintenu par des moyens 35 d'association rigide fixe permanente au réservoir 7 et à l'enveloppe 5.

Référence faite aux figures 23 et 24 qui illustrent le sous-ensemble 3+4+5+6 avant association rigide fixe permanente avec le réservoir 7 empli de contenu C, le bord proximal transversal 6fa de la collerette 6f de l'essoreur 6 est adjacent à l'épaulement intérieur 5c. Le bord périphérique de plus grand diamètre 6fc de la collerette 6f est en contact périphérique avec la face de plus petit diamètre 5a de l'enveloppe 5 vers le décrochement 5c. Dans cette zone de contact périphérique, le bord périphérique de plus grand diamètre 6fc de la collerette 6f et la face intérieure de plus petit diamètre 5a de l'enveloppe 5 réalisent une association bossage / creux 36, au voisinage de l'épaulement intérieur 5c, le bossage étant ménagé sur le bord périphérique de plus grand diamètre 6fc et le creux la face intérieure de plus petit diamètre 5a. Un tel agencement est prévu dans toutes les réalisations représentées (figures 4, 6, 9, 13, 21, 22, 23 et 24). Le terme « adjacent » doit être compris comme signifiant immédiatement voisin. Ainsi, il est ménagé sur la face intérieure de plus petit diamètre 5a de la partie distale 5e, le creux de l'association bossage / creux 36, voisin de l'épaulement intérieur 5c et dans la rainure 5d lorsqu'elle est prévue, et, écarté en direction distale, le creux de l'association bossage creux 20.

Comme il est visible sur la figure 24, le bord proximal transversal 6fa de la collerette 6f de l'essoreur 6 est légèrement écarté, avec un petit jeu axial 37, de l'épaulement intérieur 5c. Il n'y a donc pas appui axial de la collerette 6f et de l'essoreur 6 sur l'épaulement intérieur 5c.

Lorsque, dans les réalisations représentées sur les figures 9, 13, 21 et 22, 23 et 24, dans lesquelles le décrochement 5c comporte un retour de sorte à former une rainure annulaire ouverte en direction distale 5d, la collerette 6f de l'essoreur 6 est logée dans la rainure 5d et elle est en contact, par ses deux bords périphériques, respectivement de plus grand diamètre 6fa et de plus petit diamètre 6fd, avec la face du creux de la rainure 5d dans deux zones périphériques en regard.

Référence faite à la figure 19 qui illustre le récipient-applicateur 1 terminé, alors que le réservoir 7 empli de contenu C a été associé de façon rigide fixe permanente au sous-ensemble 3+4+5+6, le bord libre proximal 11c du réservoir 7 est adjacent au bord libre distal transversal 6fb de la collerette 6f, moyennant le jeu axial 34.

De plus, la terminaison proximale 11b du réservoir 7 est intégralement logée dans la partie distale 5e de l'enveloppe 5 dont elle est complémentaire de sa face de plus petit diamètre 5a, tandis que la partie distale 6g de l'essoreur 6 et la terminaison proximale 11b du réservoir 7 sont en contact périphérique, entre la face de plus grand diamètre de la partie distale 6g de l'essoreur 6 et la face de plus petit diamètre de la terminaison proximale 11b du réservoir 7.

L'essoreur 6 est disposé dans une position fixe dans l'enveloppe 5, avec son bord proximal 6c écarté axialement de l'extrémité proximale 8b de l'enveloppe 5.

Avec les dispositions constructives ainsi décrites, les moyens 35 d'association rigide fixe permanent essoreur 6 / réservoir 7-enveloppe 5 sont un serrage radial, moyennant une poussée axiale, de l'essoreur 6 sur la terminaison proximale 11b du réservoir 7 et sur l'enveloppe 5, correspondant aux contacts précédemment décrits.

Avec ces dispositions constructives, les moyens 36 d'association rigide fixe temporaire essoreur 6 / enveloppe 5 sont sous la forme de l'association bossage / creux 36 précédemment décrite.

Les moyens 14 d'étanchéité comprennent un serrage radial périphérique avec étanchéité de l'essoreur 6 sur la terminaison proximale 11b du réservoir 7 et sur l'enveloppe 5, et également, un serrage radial avec étanchéité du capuchon-applicateur-tige 3-4 sur l'extrémité proximale 8b de l'enveloppe 5, moyennant une poussée axiale lors de la fermeture du récipient-applicateur 1. Ce dernier serrage radial avec étanchéité est assuré entre la face de plus grand diamètre 26a du col 26 du capuchon-applicateur-tige 3-4 et la face de plus petit diamètre 5a de l'extrémité proximale 8b de l'enveloppe 5, en sorte que le col 26 pénètre dans l'enveloppe 5.

De plus, lorsque, dans les réalisations des figures 9, 13, 21 et 22, 23 et 24, le décrochement 5c comporte un retour de sorte à former la rainure 5d, les moyens 14 d'étanchéité comprennent un serrage radial périphérique avec étanchéité de la collerette 6f de l'essoreur 6 avec la face du creux de la rainure 5d, plus particulièrement dans deux zones périphériques en regard.

Dans le cas d'un couple de zones de faces en serrage radial périphérique de maintien ou d'étanchéité, l'une au moins des deux zones du couple présente une petite conicité pour un serrage radial périphérique avec étanchéité par suite d'une poussée axiale lors de la fabrication.

Avec la disposition constructive qui a été décrite, les moyens 14 d'étanchéité et les moyens 12 d'association capuchon 3 / enveloppe 5 sont pour partie communs.

Les figures 9 à 16 illustrent la flexibilité sans surcoût notable que permet l'invention. En effet, elle permet de réaliser une gamme de récipients-applicateurs 1 qui fermé avec son capuchon 3, est d'une longueur hors-tout extérieure donnée, d'un diamètre hors-tout extérieur donné, mais d'une contenance choisie dans une gamme de contenances, et cela à partir d'un unique type de capuchon 3 et d'un unique type d'enveloppe 5, seuls l'applicateur-tige 4, ou du moins sa tige 4a, l'essoreur 6 et le réservoir 7 étant de tailles correspondant à la contenance. Ainsi, les deux récipients-applicateurs 1 des figures 9 à 12 d'une part et 13 à 16 d'autre part, ont une longueur hors-tout extérieure donnée, ici 81,8 mm, un diamètre hors-tout extérieur donné, ici 14,7 mm. Les dimensions et contenances données ne le sont qu'à titre exemplatif et nullement limitatif. Le récipient-applicateur 1 des figures 9 à 12 est d'une contenance de 1 ml, tandis que celui des figures 13 à 16 est d'une contenance de 2 ml. Les deux récipients-applicateurs 1 ont un même unique type de capuchon 3, tant en ce qui concerne sa structure que ses dimensions, notamment une longueur hors-tout de 31,73 mm et un même unique type d'enveloppe 5, tant en ce qui concerne sa structure que ses dimensions, notamment une longueur hors-tout de 65 mm. Mais, les deux récipients-applicateurs 1 se différencient l'un de l'autre par les ensembles applicateur-tige 4, les essoreurs 6 et les réservoirs 7, lesquels sont de tailles adaptées, correspondant à la contenance. Ainsi :
- La tige 4a des figures 9 à 12 est d'un diamètre plus petit que celui de la tige 4a des figures 13 à 16, respectivement 3 mm et 5 mm.
- L'applicateur 4b des figures 9 à 12 est d'un diamètre plus petit que celui de l'applicateur 4b des figures 13 à 16.
- L'ouverture de l'essoreur du bord distal 6b des figures 9 à 12 est d'un diamètre plus petit que celui des figures 13 à 16, respectivement 3,05 mm et 5,07 mm (figures 9, 11, 13 et 15).
- La contenance du réservoir 7 des figures 9 à 12 est plus petite que celle du réservoir 7 des figures 13 à 16. Le diamètre de la face de plus petit diamètre 9a du réservoir 7 des figures 9 à 12 est plus petit que celui du réservoir 7 des figures 13 à 16, l'épaisseur de la paroi 9 des figures 9 à 12 étant plus grande que celle de la paroi 9 des figures 13 à 16. Pour cela, la face de plus petit diamètre 9a du réservoir 7 des figures 9 à 12, comporte une partie 28 dont le diamètre de la face de plus petit diamètre est réduit sur une partie notable de sa longueur axiale attenante au fond 15 du réservoir 7 et une partie tronconique 29 prolongeant la partie 28 jusqu'à la terminaison proximale 11b du réservoir 7.

On décrit maintenant le procédé de fabrication d'un récipient-applicateur 1 selon l'invention, à l'état assemblé, fermé et empli de contenu C.

Ce procédé de fabrication part des cinq pièces que sont le capuchon 3, l'applicateur-tige 4, l'enveloppe 5, l'essoreur 6 et le réservoir 7, chacune de ces pièces ayant été préalablement fabriquée.
Dans le procédé, on a à disposition un sous-ensemble unitaire 3+4+5+6 comportant le capuchon 3, l'applicateur-tige 4, l'enveloppe 5 et l'essoreur 6, mais non le réservoir 7.
On a à disposition, séparément, un réservoir 7 de réception de contenu, vide de contenu.
Le sous-ensemble unitaire 3+4+5+6 et le réservoir 7 présentent les caractéristiques précédemment décrites. Il faut comprendre par là que le sous-ensemble unitaire 3+4+5+6 et le réservoir 7 sont configurés de sorte qu'ils puissent être assemblés de façon rigide fixe en étant imbriqués et emboîtés.
Enfin, on a à disposition, séparément, du contenu C.

Puis, on emplit le réservoir 7 avec le contenu C par l'ouverture de sa terminaison proximale, 11b.

Puis, on imbrique, emboîte et associe de façon rigide fixe par introduction puis coulissement axial le sous-ensemble unitaire 3+4+5+6 et le réservoir 7 ainsi empli de contenu C, de sorte à obtenir le récipient-applicateur 1 à l'état assemblé, fermé et empli de contenu C. Compte tenu que le réservoir 7 est alors empli de contenu C, les opérations d'imbrication, emboîtement et association rigide fixe par introduction puis coulissement axial sont réalisées avec l'axe 2 disposé verticalement ou sensiblement verticalement et l'ouverture de la terminaison proximale, 11b du réservoir 7 vers le haut pour éviter que le réservoir 7 ne se vide de contenu C.

En vue d'avoir à disposition le sous-ensemble unitaire capuchon-applicateur-tige-essoreur-enveloppe 3+4+5+6, on a à disposition, séparément, un capuchon 3 et un applicateur-tige 4, une enveloppe 5, et un essoreur 6, puis on imbrique, emboîte et associe de façon rigide fixe par coulissement axial et poussée axiale d'association le capuchon 3, l'applicateur-tige 4, l'enveloppe 5 et l'essoreur 6, de sorte à obtenir le sous-ensemble unitaire capuchon-applicateur-tige-essoreur-enveloppe 3+4+5+6. Il faut comprendre par là que le capuchon 3 et l'applicateur-tige 4 sont imbriqués, emboîtés et associés, que l'essoreur 6 et l'enveloppe 5 sont imbriqués, emboîtés et associés, et que le capuchon 3 avec l'applicateur-tige 4 et l'enveloppe 5 avec l'essoreur 6 sont imbriqués, emboîtés et associés.

Dans une réalisation, on dispose d'un capuchon 3, d'un applicateur-tige 4, d'une enveloppe 5 et d'un essoreur 6 initialement séparés les uns des autres, puis on les imbrique, emboîte et associe de façon rigide fixe par coulissement axial et poussée axiale en une seule opération commune d'imbrication, emboîtement et association. Avec une telle réalisation, et comme illustré par les figures 5a à 5e, on positionne de façon coaxiale (typiquement par rapport à un axe vertical), successivement, le capuchon 3, l'applicateur-tige 4, l'enveloppe 5 et l'essoreur 6 dans le sens relatif que chacun d'eux a dans l'ensemble unitaire 3+4+5+6, puis on les fait coulisser axialement de façon relative de sorte à réaliser l'opération commune d'imbrication, emboîtement et association.

Dans une autre réalisation, on procède à plusieurs opérations successives d'imbrication, emboîtement et association en sorte que les pièces 3, 4, 5 et 6 constitutives du sous-ensemble 3+4+5+6 sont imbriquées, emboîtées et associées de façon successive. Avec une telle réalisation, on peut prévoir, le cas échéant une ou des opérations d'imbrication, emboîtement et association pour un sous-sous-ensemble du sous-ensemble 3+4+5+6. Par exemple, on peut réaliser un sous-sous-ensemble capuchon 3 + applicateur-tige 4 et un sous-sous-emble enveloppe 5 + essoreur 6, puis réaliser une opération d'imbrication, emboîtement et association du sous-sous-ensemble capuchon 3 + applicateur-tige 4 et du sous-sous-emble enveloppe 5 + essoreur 6.

S'agissant d'imbriquer, emboîter et associer l'essoreur 6 et l'enveloppe 5, on introduit l'essoreur 6 à partir de son bord proximal 6c dans l'enveloppe 5, par l'ouverture 8aa de son extrémité distale 8a, on le guide à coulissement axial dans l'enveloppe 5 en direction proximale jusqu'à ce qu'il soit maintenu associé à l'enveloppe 5 de façon rigide fixe temporaire jusqu'à montage du réservoir 7, par coopération du bossage et du creux et réalisation des moyens 36 d'association rigide fixe temporaire essoreur 6 / enveloppe 5. A cette fin, l'essoreur 6 peut être monté sur un mandrin monté à coulissement axial par rapport à un support pour l'enveloppe 5 et donc par rapport à l'enveloppe 5 elle-même. Les mouvements d'introduction et de coulissement s'entendent de façon relative entre l'essoreur 6 et l'enveloppe 5.

C'est ainsi que le sous-ensemble 3+4+5+6 est fabriqué en tant que tel sous-ensemble unitaire. Une fois fabriqué ainsi, il peut être stocké, transporté, manipulé et enfin mis en oeuvre en tant que tel en vue de la fabrication du récipient-applicateur 1. En effet, les moyens 36 d'association rigide fixe temporaire essoreur 6 / enveloppe 5 sont suffisants pour que l'essoreur 6 ne se dissocie pas intempestivement du reste du sous-ensemble.

S'agissant d'imbriquer, emboîter et associer le réservoir 7 empli de contenu C et le sous-ensemble unitaire 3+4+5+6, on introduit le réservoir 7 à partir de son bord proximal 11c dans l'enveloppe 5, on le guide à coulissement axial dans l'enveloppe 5 en direction proximale jusqu'à venir en appui sur l'essoreur 6 et on assure une poussée axiale réciproque d'association rigide. Comme précédemment les mouvements d'introduction et de coulissement s'entendent de façon relative entre le réservoir 7 empli de contenu C et le sous-ensemble unitaire 3+4+5+6.

Avec le procédé qui vient d'être décrit dans lequel on imbrique, emboîte et associe de façon rigide fixe par introduction puis coulissement axial le sous-ensemble unitaire 3+4+5+6 et le réservoir 7 ainsi empli de contenu C, de sorte à obtenir le récipient-applicateur 1, il est possible que, sur un ou plusieurs sites de plasturgie, on a à disposition le sous-ensemble unitaire 3+4+5+6 et le réservoir 7 vide de contenu C, puis on transporte le sous-ensemble unitaire 3+4+5+6 et le réservoir 7 vide de contenu sur un site de conditionnement pouvant être distant du ou des sites de plasturgie, puis, sur le site de conditionnement, on emplit le réservoir 7 avec le contenu C et on imbrique, emboîte et associe de façon rigide fixe le sous-ensemble unitaire 3+4+5+6 et le réservoir 7 empli de contenu C. Un tel processus de fabrication procure de nombreux avantages en termes de flexibilité, logistique, préservation de l'intégrité et organisation et spécialisation des sites.

Le procédé de fabrication du récipient-applicateur 1 part de ses cinq pièces distinctes constitutives 3, 4, 5, 6 et 7, qui ont été préalablement fabriquées au moyen d'un outillage de fabrication par moulage de matière plastique par injection. Compte tenu de la structure donnés aux cinq pièces distinctes constitutives 3, 4, 5, 6 et 7, et en particulier l'absence de filetage de vissage / dévissage, cet outillage de fabrication par moulage de matière plastique par injection, est tel que l'un au moins, en particulier tous les, moules de fabrication de capuchon 3, de fabrication d'applicateur-tige 4 ou du moins de tige 4a, de fabrication d'enveloppe 5, de fabrication d'essoreur 6, et de fabrication de réservoir 7, sont des moules sans tiroirs. Cette caractéristique est avantageuse en termes de coût, de simplicité, de cadence, d'efficacité.

Compte tenu de la structure donnés aux cinq pièces distinctes constitutives 3, 4, 5, 6 et 7, il est également possible de réaliser, de façon simple, rapide et économique, y compris pour des petites séries, une gamme de récipients-applicateurs 1 d'une longueur hors-tout extérieure donnée, d'un diamètre hors-tout extérieur donné, et d'une contenance choisie dans une gamme de contenances, comme il a été précédemment décrit, au moyen d'un outillage de fabrication comprenant un unique moule de fabrication de capuchon 3, un unique moule de fabrication d'applicateur-tige 4, ou du moins de tige 4a, un unique moule de fabrication d'enveloppe 5, un unique moule de fabrication d'essoreur 6, un unique moule de fabrication de réservoir 7, une gamme de broches, inserts ou analogue aptes à coopérer avec l'unique moule de fabrication d'applicateur-tige 4, ou du moins de tige 4a, de sorte à pouvoir fabriquer avec ledit moule des ensembles applicateur-tige 4, ou du moins des tiges 4a, d'une gamme de tailles (forme, diamètre, longueur) correspondant à la gamme de contenances des récipients-applicateurs 1 et à la fonction d'application, une gamme de broches, inserts ou analogue aptes à coopérer avec l'unique moule de fabrication d'essoreur, de sorte à pouvoir fabriquer avec ledit moule, des essoreurs 6 d'une gamme de tailles correspondant à la gamme d'applicateurs-tiges 4, une gamme de broches, inserts ou analogue aptes à coopérer avec l'unique moule de fabrication de réservoir 7, de sorte à pouvoir fabriquer avec ledit moule, des réservoirss 7 d'une gamme de tailles correspondant à la gamme de contenances des récipients-applicateurs 1.

La fabrication de telle ou telle pièce 4 ou 4a, 6, 7 comporte alors une étape d'association au moule considéré d'une broche, d'un insert ou analogue.

L'invention procure une grande modularité pour pouvoir fournir des caractéristiques adaptées à chaque produit, avec la même base d'outillages, comme des diamètres de tige différents (par exemple de 2 mm à 6 mm) avec le même capuchon 3, des longueurs de tige différentes, des diamètres d'essoreur différents (par exemple de 2 mm à 6 mm), des duretés d'essoreur différentes (par exemple de 40 Shore A à 70 Shore D), des contenances de réservoir 7 adaptées à chaque produit (par exemple de 1 ml à 6 ml pour un échantillon et de 4 ml à 20 ml pour des produits autres que des échantillons).

L'invention procure aussi une grande compatibilité avec une large variété d'applicateurs (brosse, pinceau, embout souple...). Et en l'absence de filetage, il peut être envisagé d'avoir un essoreur à grande ouverture large et ainsi de pouvoir utiliser de gros applicateurs (plats, cylindriques, coniques).

L'invention est idéale pour des échantillons mais elle est aussi profitable pour des produits autres destinés à être vendus.

## Revendications

1. Récipient-applicateur (1) à l'état assemblé, fermé et empli d'un contenu (C) comme un produit cosmétique, et plus spécialement un mascara, un produit « eye-liner » ou un produit « lip-gloss », ayant une forme générale cylindrique allongée le long de son axe (2) et qui comporte comme moyens :
- un réservoir (7) de réception de contenu ayant une paroi axiale périphérique (9), une terminaison distale fermée (11a) par un fond (15) et une terminaison proximale (11b) ouverte avec bord libre proximal (11c),
- un capuchon (3) de fermeture amovible, ayant une jupe (3a) axiale périphérique et une paroi sommitale (3b), et un applicateur-tige (4), agencés de sorte que le capuchon (3) et l'applicateur-tige (4) forment un capuchon-applicateur-tige (3+4) unitaire,
- une enveloppe (5) formée par une paroi axiale périphérique (5), ayant une extrémité distale (8a) et une extrémité proximale (8b) ouverte, le réservoir (7) et l'enveloppe (5) ayant une longueur axiale commune réservoir (7) / enveloppe (5),
- un essoreur (6) annulaire ayant un bord distal (6b) ouvert formant une plus petite ouverture et un bord proximal (6c) ouvert formant une plus grande ouverture,
- des moyens d'interface comprenant des moyens (13) d'association rigide fixe réservoir (7) / enveloppe (5), des moyens (12) d'association rigide amovible capuchon-applicateur-tige (3+4) / partie restante du récipient-applicateur et des moyens d'étanchéité (14),
**caractérisé en ce que** :
- l'essoreur (6) est une pièce distincte de l'enveloppe (5) et il est intégralement logé dans l'enveloppe (5),
- l'essoreur (6) comporte une partie proximale semblable à une collerette (6f) saillante centrifuge et une partie distale (6g) semblable à un tronc de cône ou à un segment sphérique,
- l'essoreur (6) est maintenu par des moyens d'association rigide fixe essoreur (6) / réservoir (7)-enveloppe (5),
- l'enveloppe (5) comporte une extrémité distale (8a) ouverte, et un décrochement (5c) transversal formant un épaulement intérieur (5c),
- la configuration de l'enveloppe (5) est adaptée pour que, lors de la fabrication du récipient-applicateur (1), d'une part, l'essoreur (6) puisse être introduit, à partir de son bord proximal (6c), dans l'extrémité distale (8a) ouverte de l'enveloppe (5), puis guidé à coulissement axial dans l'enveloppe (5) en direction proximale, d'autre part, le réservoir (7) empli de contenu (C) puisse être introduit, à partir de son bord proximal (11c), dans l'extrémité distale (8a) ouverte de l'enveloppe (5), puis guidé à coulissement axial dans l'enveloppe (5) en direction proximale,
- le bord proximal (6fa) de la collerette (6f) de l'essoreur (6) est adjacent à l'épaulement intérieur (5c),
- le bord proximal (11c) du réservoir (7) est adjacent au bord distal (6fb) de la collerette (6f),
- la collerette (6f) est en contact périphérique avec la face intérieure de plus petit diamètre (5a) de l'enveloppe (5),
- la terminaison proximale (11b) du réservoir (7) est intégralement logée dans l'enveloppe (5) et elle est complémentaire de la face intérieure de plus petit diamètre (5a) de l'enveloppe (5),
- la partie distale (6g) de l'essoreur (6) et la terminaison proximale (11b) du réservoir (7) sont en contact périphérique.

2. Récipient-applicateur (1) selon la revendication 1, dans lequel l'essoreur (6) est flexible.

3. Récipient-applicateur (1) selon l'une des revendications 1 et 2, dans lequel les moyens (35) d'association rigide fixe essoreur (6) / réservoir (7)-enveloppe (5) sont un serrage radial, moyennant une poussée axiale, de l'essoreur (6) sur la terminaison proximale (11b) du réservoir (7) et sur l'enveloppe (5).

4. Récipient-applicateur (1) selon l'une des revendications 1 à 3, qui comporte des moyens (36) d'association rigide fixe temporaire essoreur (6) / enveloppe (5) alors que, lors de la fabrication le réservoir (7) n'est pas encore associé de façon rigide fixe à et dans l'enveloppe (5), sous la forme d'une association bossage / creux de la face périphérique de la collerette (6f) de l'essoreur (6) et de la face intérieure de l'enveloppe (5), au voisinage de l'épaulement intérieur (5c).

5. Récipient-applicateur (1) selon l'une des revendications 1 à 4, dans lequel le décrochement (5c) comporte un retour intérieur dirigé axialement dans la direction distale, de sorte à former une rainure (5d) annulaire ouverte en direction distale, dans laquelle est logée la collerette (6f) de l'essoreur (6).

6. Récipient-applicateur (1) selon l'une des revendications 1 à 5, dans lequel l'enveloppe (5) comporte deux parties en prolongation axiale réunies par le décrochement (5c), une partie distale (5e) extérieure de plus grand diamètre dans laquelle sont logés la collerette (6f) et la partie distale (6g) de l'essoreur (6) et au moins la partie proximale du réservoir (7), et une partie proximale (5f) intérieure de plus petit diamètre logée dans le capuchon (3).

7. Récipient-applicateur (1) selon l'une des revendications 1 à 6, dans lequel le capuchon (3) et l'applicateur-tige (4) sont deux pièces distinctes, l'applicateur-tige (4) pouvant être lui-même l'assemblage rigide fixe de plusieurs composants, avec des moyens d'association rigide fixe capuchon (3) / applicateur-tige (4) comprenant, appartenant à l'applicateur-tige (4), une partie d'association (17) rigide fixe de l'applicateur-tige (4) à la jupe (3a) du capuchon (3), moyennant une poussée axiale, de sorte à former le capuchon-applicateur-tige (3+4) unitaire.

8. Récipient-applicateur (1) selon l'une des revendications 1 à 7, dans lequel les moyens d'étanchéité (14) comprennent un serrage radial périphérique avec étanchéité de l'essoreur (6) sur la terminaison proximale (11b) du réservoir (7) et sur l'enveloppe (5).

9. Récipient-applicateur (1) selon l'une des revendications 1 à 8, dans lequel dans un couple de zones de face d'essoreur (6), de réservoir (7), d'enveloppe (5), en serrage radial périphérique avec étanchéité, l'une au moins des deux zones du couple présente une petite conicité pour un serrage radial périphérique avec étanchéité par suite d'une poussée axiale lors de la fabrication.

10. Récipient-applicateur (1) selon l'une des revendications 1 à 9, dans lequel le réservoir (7) comprend une seule paroi (9) périphérique qui assure la fonction de limiter l'espace recevant le contenu et participe à la fonction d'association rigide fixe réservoir (7) / enveloppe (5).

11. Récipient-applicateur (1) selon l'une des revendications 1 à 10, dans lequel le réservoir (7) comprend, associées de façon rigide fixe :
- une première paroi axiale périphérique (9c) de plus petit diamètre à laquelle est associé le fond (15), qui participe à la fonction de limiter l'espace recevant le contenu C,
- une seconde paroi axiale périphérique (9d), de plus grand diamètre, qui participe à la fonction de solidarisation rigide fixe du réservoir (7) avec l'enveloppe (5),
- une paroi axiale périphérique de raccordement (9e) des parois de plus petit et de plus grand diamètre (9c) et (9d), disposées radialement l'une en regard de l'autre et associées entre elles de façon rigide fixe.

12. Sous-ensemble unitaire capuchon-applicateur-tige-essoreur-enveloppe (3+4+5+6) spécialement apte et destiné à former, lorsqu'il est assemblé de façon rigide fixe avec un réservoir (7) empli de contenu moyennant des moyens d'interface d'association rigide fixe et des moyens d'étanchéité (14), un récipient-applicateur (1) assemblé, fermé et empli de contenu selon l'une des revendications 1 à 11, ledit sous-ensemble (3+4+5+6) ayant une forme générale cylindrique allongée le long de son axe (2) et étant configuré de sorte qu'avec le réservoir (7) ils puissent être imbriqués et emboîtés :
- qui comporte comme moyens :
- un capuchon (3), ayant une jupe (3a) axiale périphérique et une paroi sommitale (3b), et un applicateur-tige (4), agencés de sorte que le capuchon (3) et l'applicateur-tige (4) forment un capuchon-applicateur-tige (3+4) unitaire,
- une enveloppe (5) comportant une paroi axiale périphérique, une extrémité distale (8a) ouverte, une extrémité proximale (8b) ouverte et un décrochement (5c) transversal vers l'axe formant épaulement intérieur (5c), et ayant une configuration adaptée pour que, lors de la fabrication, d'une part, l'essoreur (6) puisse être introduit, à partir de son bord proximal, dans l'extrémité distale (8a) ouverte de l'enveloppe (5), puis guidé à coulissement axial dans l'enveloppe (5) en direction proximale, d'autre part, le réservoir (7) puisse être introduit dans l'extrémité distale (8a) ouverte de l'enveloppe (5), puis guidé à coulissement axial dans l'enveloppe (5) en direction proximale,
- un essoreur (6) annulaire ayant un bord distal ouvert formant une plus petite ouverture et un bord proximal ouvert formant une plus grande ouverture, qui est une pièce distincte de l'enveloppe (5) intégralement logé dans elle, qui comporte une partie proximale semblable à une collerette (6f) saillante centrifuge et une partie distale semblable à un tronc de cône ou à un segment sphérique, avec le bord proximal de la collerette (6f) adjacent à l'épaulement, la collerette (6f) en contact périphérique avec la face intérieure de l'enveloppe (5),
- des moyens d'interface comprenant des moyens d'association rigide amovible capuchon-applicateur-tige (3+4) / enveloppe (5) et des moyens d'association rigide fixe temporaire essoreur (6) / enveloppe (5), et des moyens d'étanchéité (14),
- qui est fabriqué en tant que tel sous-ensemble unitaire et qui peut être stocké, transporté, manipulé et assemblé audit réservoir (7) empli de contenu en sorte d'obtenir un récipient-applicateur à l'état assemblé, fermé et empli de contenu.

13. Procédé de fabrication d'un récipient-applicateur (1) à l'état assemblé, fermé et empli de contenu (C), selon l'une des revendications 1 à 11, dans lequel :
- on a à disposition, séparément :
- un sous-ensemble unitaire capuchon-applicateur-tige (3+4)-essoreur (6)-enveloppe (5), selon la revendication 12,
- un réservoir (7) de réception de contenu, vide de contenu, ayant une paroi axiale périphérique (9), une terminaison distale fermée (11a) par un fond (15) et une terminaison proximale (11b) ouverte (11b) avec bord proximal,
- du contenu (C),
le sous-ensemble unitaire capuchon-applicateur-tige (3+4)-essoreur (6)-enveloppe (5) et le réservoir (7) de réception de contenu étant configurés de sorte qu'ils puissent être assemblés de façon rigide fixe en étant imbriqués et emboîtés,
- puis on emplit le réservoir (7) avec le contenu (C) par l'ouverture de sa terminaison proximale (11b),
- puis on imbrique, emboîte et associe de façon rigide fixe par coulissement axial le sous-ensemble unitaire capuchon-applicateur-tige (3+4)-essoreur (6)-enveloppe (5) et le réservoir (7) ainsi empli de contenu (C), de sorte à obtenir le récipient-applicateur (1) à l'état assemblé, fermé et empli de contenu (C).

14. Procédé selon la revendication 13, dans lequel en vue d'avoir à disposition le sous-ensemble unitaire capuchon-applicateur-tige-essoreur-enveloppe (3+4+5+6) :
- on a à disposition, séparément, un capuchon (3) et un applicateur-tige (4), une enveloppe (5), et un essoreur (6),
- puis on imbrique, emboîte et associe de façon rigide fixe par coulissement axial et poussée axiale d'association le capuchon (3), l'applicateur-tige (4), l'enveloppe (5) et l'essoreur (6), de sorte à obtenir le sous-ensemble unitaire capuchon-applicateur-tige (3+4)-essoreur (6)-enveloppe (5), à savoir le capuchon (3) et l'applicateur-tige (4) étant imbriqués, emboîtés et associés, l'essoreur (6) et l'enveloppe (5) étant imbriqués, emboîtés et associés, et le capuchon (3) avec l'applicateur-tige (4) et l'enveloppe (5) avec l'essoreur (6) étant imbriqués, emboîtés et associés.

15. Outillage de fabrication par moulage de matière plastique par injection, apte et destiné à la mise en œuvre du procédé de fabrication selon l'une des revendications 13 et 14, comprenant des moules de fabrication de capuchon (3), de fabrication d'applicateur-tige (4) ou du moins de tige (4a), de fabrication d'enveloppe (5), de fabrication d'essoreur (6), et de fabrication de réservoir (7), dont au moins un, et en particulier tous, sont des moules sans tiroirs.

## Patentansprüche

1. Behälter mit Auftragselement (1) im zusammengesetzten Zustand, der geschlossen und mit einem Inhalt (C), wie zum Beispiel einem kosmetischen Produkt und insbesondere einem Mascara, einem Eyeliner-Produkt oder einem Lipgloss-Produkt befüllt ist, mit einer allgemein zylindrischen, entlang seiner Achse (2) länglichen Form, der folgende Mittel umfasst:
- ein Reservoir (7) zur Aufnahme eines Inhalts, das eine axiale Umfangswand (9), ein durch einen Boden (15) verschlossenes distales Ende (11a) und ein offenes proximales Ende (11b) mit einem freien proximalen Rand (11c) aufweist,
- eine abnehmbare Verschlusskappe (3), die eine axiale Umfangsschürze (3a) und eine obere Wand (3b) aufweist, und ein Auftragselement mit Stiel (4), wobei diese so angeordnet sind, dass die Kappe (3) und das Auftragselement mit Stiel (4) die Einheit bestehend aus Kappe, Auftragselement und Stiel (3+4) bilden,
- eine Hülse (5), die durch eine axiale Umfangswand (5) gebildet wird und ein distales Ende (8a) und ein offenes proximales Ende (8b) aufweist, wobei das Reservoir (7) und die Hülse (5) eine gemeinsame axiale Länge umfassend Reservoir (7) und Hülse (5) haben,
- einen ringförmigen Abstreifer (6) mit einem offenen distalen Rand (6b), der eine kleinere Öffnung bildet, und einem offenen proximalen Rand (6c), der eine größere Öffnung bildet,
- Schnittstellenmittel, die Mittel (13) zum festen, starren Verbinden des Reservoirs (7) mit der Hülse (5), Mittel (12) zum starren Verbinden von Kappe, Auftragselement und Stiel (3+4) mit dem restlichen Teil des Behälters mit Auftragselement sowie Dichtungsmittel (14) umfassen,
**dadurch gekennzeichnet, dass**:
- der Abstreifer (6) ein sich von der Hülse (5) unterscheidendes Teil und vollständig in der Hülse (5) aufgenommen ist,
- der Abstreifer (6) einen zentrifugal vorstehenden bundartigen proximalen Teil (6f) und einen kegelstumpfartigen oder kugelsegmentartigen distalen Teil (6g) umfasst,
- der Abstreifer (6) durch Mittel für eine feste, starre Verbindung des Abstreifers (6) mit Reservoir (7) und Hülse(5) gehalten wird,
- die Hülse (5) ein offenes distales Ende (8a) umfasst und einen quer verlaufenden Absatz (5c), der eine innere Schulter (5c) bildet,
- die Gestaltung der Hülse (5) so angepasst ist, dass bei der Herstellung des Behälters mit Auftragselement (1) einerseits der Abstreifer (6) von seinem proximalen Rand (6c) in das offene distale Ende (8a) der Hülse (5) eingeführt und dann in proximaler Richtung axial gleitend in der Hülse (5) geführt werden kann, und andererseits das mit Inhalt (C) befüllte Reservoir (7) von seinem proximalen Rand (11c) in das offene distale Ende (8a) der Hülse (5) eingeführt und dann in proximaler Richtung axial gleitend in der Hülse (5) geführt werden kann,
- der proximale Rand (6fa) des Bunds (6f) des Abstreifers (6) an die innere Schulter (5c) angrenzt,
- der proximale Rand (11c) des Reservoirs (7) an den distalen Rand (6fb) des Bunds (6f) angrenzt,
- der Bund (6f) in Umfangskontakt mit der Innenfläche (5a) der Hülse (5) mit kleinerem Durchmesser steht,
- das proximale Ende (11b) des Reservoirs (7) vollständig in der Hülse (5) aufgenommen und komplementär zur Innenfläche (5a) der Hülse (5) mit kleinerem Durchmesser ist,
- der distale Teil (6g) des Abstreifers (6) in Umfangskontakt mit dem proximalen Ende (11b) des Reservoirs (7) steht.

2. Behälter mit Auftragselement (1) nach Anspruch 1, in dem der Abstreifer (6) elastisch ist.

3. Behälter mit Auftragselement (1) nach einem der Ansprüche 1 und 2, in dem die Mittel (35) zum festen, starren Verbinden des Abstreifers (6) mit dem Reservoir (7) und der Hülse (5) eine radiale Einspannung bilden, so dass eine axiale Schubkraft auf das proximale Ende (11b) des Reservoirs (7) und auf die Hülse (5) ausgeübt wird.

4. Behälter mit Auftragselement (1) nach einem der Ansprüche 1 bis 3 mit Mitteln (36) zur festen, starren temporären Verbindung des Abstreifers (6) mit der Hülse (5), wobei das Reservoir (7) bei der Herstellung noch nicht fest und starr mit und in der Hülse (5) verbunden ist, in Form einer Wulst-Mulden-Verbindung der Umfangsfläche des Bunds (6f) des Abstreifers (6) mit der Innenfläche der Hülse (5) in der Nähe der inneren Schulter (5c).

5. Behälter mit Auftragselement (1) nach einem der Ansprüche 1 bis 4, in dem der Absatz (5c) innen eine Rückführung umfasst, die axial in distale Richtung gerichtet ist, so dass eine in distaler Richtung offene Ringnut (5d) gebildet wird, in welcher der Bund (6f) des Abstreifers (6) aufgenommen ist.

6. Behälter mit Auftragselement (1) nach einem der Ansprüche 1 bis 5, in dem die Hülse (5) zwei Teile in axialer Verlängerung aufweist, die durch den Absatz (5c) miteinander verbunden sind, einen äußeren distalen Teil (5e) mit größerem Durchmesser, in dem der Bund (6f) und der distale Teil (6g) des Abstreifers (6) und zumindest der proximale Teil des Reservoirs (7) aufgenommen sind, und einen inneren proximalen Teil (5f) mit kleinerem Durchmesser, der in der Kappe (3) aufgenommen ist.

7. Behälter mit Auftragselement (1) nach einem der Ansprüche 1 bis 6, in dem die Kappe (3) und das Auftragselement mit Stiel (4) zwei unterschiedliche Teile sind, wobei das Auftragselement mit Stiel (4) an sich die feste, starre Baugruppe mehrerer Komponenten sein kann, mit Mitteln zurfesten und starren Verbindung der Kappe (3) mit dem Auftragselement mit Stiel (4), die einen zum Auftragselement mit Stiel (4) gehörenden festen, starren Teil (17) zum Verbinden des Auftragselements mit Stiel (4) mit der Schürze (3a) der Kappe (3) durch axialen Schub umfasst, um die Einheit bestehend aus Kappe, Auftragselement und Stiel (3+4) zu bilden.

8. Behälter mit Auftragselement (1) nach einem der Ansprüche 1 bis 7, in dem die Dichtungsmittel (14) umlaufend und radial mit der Abdichtung des Abstreifers (6) am proximalen Ende (11b) des Reservoirs (7) und an der Hülse (5) eingespannt sind.

9. Behälter mit Auftragselement (1) nach einem der Ansprüche 1 bis 8, in dem in zwei Frontbereichen von Abstreifer (6), Reservoir (7) und Hülse (5) bei radialer umlaufender Einspannung mit Abdichtung mindestens einer der beiden Bereiche eine kleine Konizität für die radiale umlaufende Einspannung mit Abdichtung infolge des axialen Schubs bei der Herstellung aufweist.

10. Behälter mit Auftragselement (1) nach einem der Ansprüche 1 bis 9, in dem das Reservoir (7) eine einzige Umfangswand (9) aufweist, die die Funktion der Begrenzung des den Inhalt aufnehmenden Raumes hat und an der Funktion der festen, starren Verbindung des Reservoirs (7) mit der Hülse (5) mitwirkt.

11. Behälter mit Auftragselement (1) nach einem der Ansprüche 1 bis 10, wobei das fest und starr verbundene Reservoir (7) folgendes umfasst:
eine erste axiale Umfangswand (9c) mit kleinerem Durchmesser, mit welcher der Boden (15) verbunden ist und die an der Funktion zur Begrenzung des Raums zur Aufnahme des Inhalts C mitwirkt,
eine zweite axiale Umfangswand (9d) mit größerem Durchmesser, die an der Funktion zur festen und starren Verbindung des Reservoirs (7) mit der Hülse (5) mitwirkt,
eine axiale Umfangswand (9e) für das Ansetzen der Wände kleineren und größeren Durchmessers (9c) und (9d), die radial einander gegenüberliegend angeordnet und fest und starr miteinander verbunden sind.

12. Einstückige Unterbaugruppe bestehend aus Kappe, Auftragselement, Stiel, Abstreifer und Hülse (3+4+5+6), die dazu geeignet und speziell dazu bestimmt ist, einen zusammengesetzten, verschlossenen und mit Inhalt gefüllten Behälter mit Auftragselement (1) nach einem der Ansprüche 1 bis 11 zu bilden, wenn sie mithilfe von festen, starren Schnittstellenverbindungsmitteln und Dichtungsmitteln (14) fest und starr mit einem mit Inhalt gefüllten Reservoir (7) zusammengebaut wurde, wobei die Unterbaugruppe (3+4+5+6) entlang ihrer Achse (2) eine allgemein längliche zylindrische Form aufweist und so gestaltet ist, dass sie und das Reservoir (7) ineinander geschoben und verschachtelt miteinander verbunden werden können:
- die folgende Mittel umfasst:
- eine Verschlusskappe (3) mit axialer Umfangsschürze (3a) und oberer Wand (3b) und ein Auftragselement mit Stiel (4), wobei diese so angeordnet sind, dass die Kappe (3) und das Auftragselement mit Stiel (4) eine Einheit bestehend aus Kappe, Auftragselement und Stiel (3+4) bilden,
- eine Hülse (5), die eine axiale Umfangswand, ein offenes distales Ende (8a), ein offenes proximales Ende (8b) und einen quer zur Achse verlaufenden Absatz (5c) umfasst, der eine innere Schulter (5c) bildet, und die so gestaltet ist, dass bei der Herstellung einerseits der Abstreifer (6) von seinem proximalen Rand in das offene distale Ende (8a) der Hülse (5) eingeführt und dann axial gleitend in der Hülse (5) in proximaler Richtung geführt, und andererseits das Reservoir (7) in das offene distale Ende (8a) der Hülse (5) eingeführt und dann axial gleitend in der Hülse (5) in proximaler Richtung geführt werden kann,
- einen ringförmigen Abstreifer (6) mit einem offenen distalen Rand, der eine kleinere Öffnung bildet, und einem offenen proximalen Rand, der eine größere Öffnung bildet, wobei er ein sich von der Hülse (5) unterscheidendes Teil ist und vollständig darin aufgenommen ist und einen zentrifugal vorstehenden bundartigen proximalen Teil (6f) und einen kegelstumpfartigen oder kugelsegmentartigen distalen Teil aufweist, wobei der proximale Rand des Bunds (6f) an die Schulter angrenzt und der Bund (6f) in Umfangskontakt mit der Innenfläche der Hülse (5) steht,
- Schnittstellenmittel, die Mittel (13) zum starren, abnehmbaren Verbinden vom Kappe, Auftragselement und Stiel (3+4) mit der Hülse (5), Mittel zum festen, starren, vorübergehenden Verbinden des Abstreifers (6) mit der Hülse (5) sowie Dichtungsmittel (14) umfasst,
- die als eine einstückige Unterbaugruppe hergestellt ist und die gelagert, transportiert, gehandhabt und mit dem mit Inhalt gefüllten Reservoir (7) zusammengesetzt werden kann, um einen Behälter mit Auftragselement im zusammengesetzten, geschlossenen und mit Inhalt befüllten Zustand zu erhalten.

13. Verfahren zur Herstellung eines Behälters mit Auftragselement (1) im zusammengesetzten, geschlossenen und mit Inhalt (C) befüllten Zustand nach einem der Ansprüche 1 bis 11, in dem:
- jeweils einzeln folgendes zur Verfügung steht:
- eine einstückige Unterbaugruppe bestehend aus Kappe, Auftragselement, Stiel (3+4), Abstreifer (6) und Hülse (5) nach Anspruch 12,
- ein leeres Reservoir (7) zur Aufnahme eines Inhalts, das eine axiale Umfangswand (9), ein durch einen Boden (15) verschlossenes distales Ende (11a) und ein offenes (11b) proximales Ende (11b) mit einem proximalen Rand aufweist,
- ein Inhalt (C),
wobei die einstückige Unterbaugruppe bestehend aus Kappe, Auftragselement, Stiel (3+4), Abstreifer (6) und Hülse (5) und das Reservoir (7) zur Aufnahme des Inhalts so gestaltet sind, dass sie fest und starr, ineinandergeschoben und miteinander verschachtelt zusammengesetzt werden können,
- anschließend das Reservoir (7) durch die Öffnung seines proximalen Endes (11b) mit dem Inhalt (C) befüllt wird,
- und die einstückige Unterbaugruppe bestehend aus Kappe, Auftragselement und Stiel (3+4), Abstreifer (6) und Hülse(5) und das mit Inhalt (C) befüllte Reservoir (7) durch axiales Gleiten fest und starr miteinander verbunden werden, um den Behälter mit Auftragselement (1) im zusammengesetzten, geschlossenen und mit Inhalt (C) befüllten Zustand zu erhalten.

14. Verfahren nach Anspruch 13, in dem man, um die einstückige Unterbaugruppe Kappe, Auftragselement, Stiel, Abstreifer und Hülse (3+4+5+6) zur Verfügung zu haben:
- separat eine Kappe (3) und ein Auftragselement mit Stiel (4), eine Hülse (5) und einen Abstreifer (6) vorsieht,
- man die Kappe (3), das Auftragselement mit Stiel (4), die Hülse (5) und den Abstreifer (6) durch axiales Gleiten und axialen Verbindungsschub ineinander schiebt, miteinander verschachtelt und fest und starr miteinander verbindet, um die einstückige Unterbaugruppe bestehend aus Kappe, Auftragselement, Stiel (3+4), Abstreifer (6) und Hülse (5) zu erhalten, wobei die Kappe (3) und das Auftragselement mit Stiel (4) ineinander geschoben und verschachtelt miteinander verbunden sind, die Abstreifer (6) und die Hülse (5) ineinander geschoben und verschachtelt miteinander verbunden sind, und die Kappe (3) mit dem Auftragselement mit Stiel (4) und die Hülse (5) mit dem Abstreifer (6) ineinander geschoben und verschachtelt miteinander verbunden sind.

15. Werkzeug zur Herstellung von Kunststoff durch Spritzgießen, das dazu geeignet und bestimmt ist, das Herstellungsverfahren nach einem der Ansprüche 13 bis 14 umzusetzen und Formen zur Herstellung der Kappe (3), zur Herstellung des Auftragselements mit Stiel (4) oder zumindest des Stiels (4a), zur Herstellung der Hülse (5), zur Herstellung des Abstreifers (6) und zur Herstellung des Reservoirs (7) umfasst, von denen mindestens eine, insbesondere alle, Formen ohne Schieber sind.

## Claims

1. A container/applicator (1) in the assembled state, closed and filled with contents (C) such as a cosmetic product, specifically a mascara, an eye-liner product or a lip-gloss product, having a generally elongate cylindrical shape along its axis (2) and which comprises as means:
- a reservoir (7) for receiving contents, having a peripheral axial wall (9), a distal end (11a) closed by a bottom (15) and an open proximal end (11b) with a proximal free edge (11c),
- a removable closure cap (3), having a peripheral axial skirt (3a) and a top wall (3b), and an applicator/rod (4), arranged so that the cap (3) and the applicator/rod (4) form a unitary cap/applicator/rod (3+4),
- a casing (5) formed by a peripheral axial wall (5), having a distal end (8a) and an open proximal end (8b), the reservoir (7) and the casing (5) having a common axial length of the reservoir (7) and the casing (5),
- an annular squeegee (6) having an open distal edge (6b) forming a smaller opening and an open proximal edge (6c) forming a larger opening,
- interface means comprising means (13) for fixed rigid combination of the reservoir (7) and the casing (5), means (12) for removable rigid combination of the cap/applicator/rod (3+4) and the remaining portion of the container/applicator, and sealing means (14),
**characterised in that**:
- the squeegee (6) is a part separate from the casing (5) and is housed completely in the casing (5),
- the squeegee (6) has a proximal portion similar to a centrifugal protruding flange (6f) and a distal portion (6g) similar to a truncated cone or a spherical segment,
- the squeegee (6) is held by means for fixed rigid combination of the squeegee (6) with the reservoir (7) and the casing (5),
- the casing (5) has an open distal end (8a), and a transverse step (5c) forming an inner shoulder (5c),
- the configuration of the casing (5) is suited so that, during the manufacture of the container/applicator (1), on the one hand, the squeegee (6) can be inserted, starting with its proximal edge (6c), into the open distal end (8a) of the casing (5), then guided to slide axially into the casing (5) in the proximal direction, and on the other hand, the reservoir (7) filled with contents (C) can be inserted, starting with its proximal edge (11c), into the open distal end (8a) of the casing (5) and then guided to slide axially into the casing (5) in the proximal direction,
- the proximal edge (6fa) of the flange (6f) of the squeegee (6) is adjacent to the inner shoulder (5c),
- the proximal edge (11c) of the reservoir (7) is adjacent to the distal edge (6fb) of the flange (6f),
- the flange (6f) is in peripheral contact with the inner face of smaller diameter (5a) of the casing (5),
- the proximal end (11b) of the reservoir (7) is housed completely in the casing (5) and matches the inner face of smaller diameter (5a) of the casing (5),
- the distal portion (6g) of the squeegee (6) and the proximal end (11b) of the reservoir (7) are in peripheral contact.

2. Container/applicator (1) according to claim 1, wherein the squeegee (6) is flexible.

3. Container/applicator (1) according to one of claims 1 and 2, wherein the means (35) for fixed rigid combination of the squeegee (6) with the reservoir (7) and the casing (5) are radial clamping, with axial pushing, of the squeegee (6) on the proximal end (11b) of the reservoir (7) and on the casing (5).

4. Container-applicator (1) according to one of claims 1 to 3, which comprises means (36) for temporary fixed rigid combination of the squeegee (6) and the casing (5) when, during manufacture, the reservoir (7) is not yet combined in a fixed rigid manner with and inside the casing (5), in the form of a boss/recess combination of the peripheral face of the flange (6f) of the squeegee (6) and of the inner face of the casing (5), in the vicinity of the inner shoulder (5c).

5. Container/applicator (1) according to one of claims 1 to 4, wherein the step (5c) comprises an inner return directed axially in the distal direction, so as to form an annular groove (5d) open in the distal direction in which the flange (6f) of the squeegee (6) is housed.

6. Container/applicator (1) according to one of claims 1 to 5, wherein the casing (5) has two parts extending axially, joined by the step (5c), an outer distal portion (5e) having larger diameter in which the flange (6f), the distal portion (6g) of the squeegee (6) and at least the proximal portion of the reservoir (7) are housed, and an inner proximal portion (5f) having a smaller diameter housed in the cap (3).

7. Container/applicator (1) according to one of claims 1 to 6, wherein the cap (3) and the applicator/rod (4) are two separate parts, and the applicator/rod (4) in turn can be the fixed rigid assembly of several components, with means for fixed rigid combination of the cap (3) and the applicator/rod (4) comprising, belonging to the applicator/rod (4), a portion (17) for fixed rigid combination of the applicator/rod (4) with the skirt (3a) of the cap (3), by axial pushing, so as to form the cap/applicator/rod unit (3+4).

8. Container/applicator (1) according to one of claims 1 to 7, whereing the sealing means (14) comprise a sealed peripheral radial clamp for the squeegee (6) on the proximal end (11b) of the reservoir (7) and on the casing (5).

9. Container/applicator (1) according to one of claims 1 to 8, wherein in a couple of squeegee (6), reservoir (7), casing (5) face areas, with a sealed peripheral radial clamp, at least one of the two couple areas presents a small conicity for a sealed peripheral radial clamp after axial pushing during manufacture.

10. Container/applicator (1) according to one of claims 1 to 9, wherein the reservoir (7) comprises a single peripheral wall (9) that provides the function of bounding the space that receives the contents and participates in the function of fixed rigid combination of the reservoir (7) and the casing (5).

11. Container/applicator (1) according to one of claims 1 to 10, wherein the reservoir (7) comprises, combined in a fixed rigid manner:
- a first peripheral axial wall (9c) of smaller diameter with which the bottom (15) is combined, which participates in the function of bounding the space that receives the contents C,
- a second peripheral axial wall (9d) of larger diameter, which participates in the function of fixed rigid securing of the reservoir (7) with the casing (5),
- a peripheral axial wall (9e) for connecting the walls of smaller and larger diameter (9c) and (9d), arranged radially facing one another and combined together in a fixed rigid manner.

12. A unitary cap/applicator/rod/squeegee/casing sub-assembly (3+4+5+6) specially capable of and intended for forming, when assembled in a fixed rigid manner with a reservoir (7) filled with contents by interface means for fixed rigid combination and sealing means (14), a container/applicator (1) assembled, closed and filled with contents according to one of claims 1 to 11, said sub-assembly (3+4+5+6) having a generally elongate cylindrical shape along its axis (2) and being configured so that it can be interlocked and nested with the reservoir (7):
- which includes as means:
- a cap (3), having a peripheral axial skirt (3a) and a top wall (3b), and an applicator/rod (4), arranged so that the cap (3) and the applicator/rod (4) form a unitary cap/applicator/rod (3+4),
- a casing (5) having a peripheral axial wall, an open distal end (8a), an open proximal end (8b) and a transverse step (5c) towards the axis forming an inner shoulder (5c), and having a configuration adapted so that, during manufacture, on the one hand, the squeegee (6) can be inserted, starting with its proximal edge, into the open distal end (8a) of the casing (5), then guided to slide axially into the casing (5) in the proximal direction, and on the other hand, the reservoir (7) can be inserted into the open distal end (8a) of the casing (5) and then guided to slide axially into the casing (5) in the proximal direction,
- an annular squeegee (6) having an open distal edge forming a smaller opening and an open proximal edge forming a larger opening, which is a part separate from the casing (5) and housed completely therein, which has a proximal portion similar to a centrifugally protruding flange (6f) and a distal portion similar to a truncated cone or a spherical segment, with the proximal edge of the flange (6f) adjacent to the shoulder, the flange (6f) being in peripheral contact with the inner face of the casing (5),
- interface means comprising means for removable rigid combination of the cap/applicator/rod (3+4) and the casing (5) and means for temporary fixed rigid combination of the squeegee (6) and the casing (5), and sealing means (14),
- which is manufactured as such a unitary sub-assembly and which can be stored, transported, handled and assembled with said reservoir (7) filled with contents so as to obtain a container/applicator in the assembled state, closed and filled with contents.

13. A method for manufacturing a container/applicator (1) in the assembled state, closed and filled with contents (C), according to one of claims 1 to 11, wherein:
- the following are provided separately:
- a unitary cap/applicator/rod (3+4)/squeegee (6)/casing (5) sub-assembly according to claim 12,
- a reservoir (7) for receiving contents, empty of contents, having a peripheral axial wall (9), a distal end (11a) closed by a bottom (15) and an open proximal end (11b) with a proximal edge,
- contents (C),
the unitary cap/applicator/rod (3+4)/squeegee (6)/casing (5) sub-assembly and the reservoir (7) for receiving contents being configured so that they can be rigidly assembled together by being interlocked and nested,
- then, the reservoir (7) is filled with the contents (C) via the opening of its proximal end (11b),
- and then, the unitary cap/applicator/rod (3+4)/squeegee (6)/casing (5) sub-assembly and the reservoir (7) thus filled with contents (C) are interlocked, nested and combined in a fixed rigid manner by sliding axially, so as to obtain the container/applicator (1) in the assembled state, closed and filled with contents (C).

14. Method according to claim 13, wherein, in order to provide the unitary cap/applicator/rod/squeegee/casing sub-assembly (3+4+5+6):
- a cap (3) and an applicator/rod (4), a casing (5), and a squeegee (6) are provided separately.
- then, the cap (3), the applicator/rod (4), the casing (5) and the squeegee (6) are interlocked, nested and combined in a fixed rigid manner by axial sliding and axial combination pushing so as to obtain the unitary cap/applicator/rod (3+4)/squeegee (6)/casing (5) sub-assembly, in particular the cap (3) and the applicator/rod (4) being interlocked, nested and combined, the squeegee (6) and the casing (5) being interlocked, nested and combined, and the cap (3) and the applicator/rod (4) as well as the casing (5) and the squeegee (6) being interlocked, nested and combined.

15. Tool for manufacturing by plastic injection moulding, capable of and intended for implementing the manufacturing method according to one of claims 13 and 14, wherein at least one and in particular all the moulds for manufacturing a cap (3), for manufacturing an applicator/rod (4) orat least a rod (4a), for manufacturing a casing (5), for manufacturing a squeegee (6) and for manufacturing a reservoir (7) are moulds without slides.
